# EUROPEAN PATENT SPECIFICATION

(11) **EP 4 280 503 B1**
(45) Date of publication and mention of the grant of the patent: **02.12.2026**
(21) Application number: 22739811.2
(22) Date of filing: 17.01.2022
(51) Int. Cl.: H04L 1/18, H04W 72/04, H04L 1/00, H04W 72/12

(54) **METHOD, USER EQUIPMENT, PROCESSING DEVICE, STORAGE MEDIUM, AND COMPUTER PROGRAM FOR TRANSMITTING HARQ-ACK INFORMATION, AND METHOD AND BASE STATION FOR RECEIVING HARQ-ACK INFORMATION**
VERFAHREN, BENUTZERGERÄT, VERARBEITUNGSVORRICHTUNG, SPEICHERMEDIUM UND COMPUTERPROGRAMM ZUR ÜBERTRAGUNG VON HARQ-ACK-INFORMATIONEN SOWIE VERFAHREN UND BASISSTATION ZUM EMPFANGEN VON HARQ-ACK-INFORMATIONEN
PROCÉDÉ, ÉQUIPEMENT UTILISATEUR, DISPOSITIF DE TRAITEMENT, SUPPORT DE STOCKAGE ET PROGRAMME INFORMATIQUE POUR TRANSMETTRE DES INFORMATIONS DE HARQ-ACK, ET PROCÉDÉ ET STATION DE BASE POUR RECEVOIR DES INFORMATIONS DE HARQ-ACK

(30) Priority: 15.01.2021 KR 20210006350; 11.05.2021 KR 20210060977
(43) Date of publication of application: 22.11.2023
(73) Proprietor: LG Electronics Inc., Yeongdeungpo-gu Seoul 07336 (KR)
(72) Inventor: BAE, Duckhyun, Seoul 06772 (KR); YANG, Suckchel, Seoul 06772 (KR); KIM, Seonwook, Seoul 06772 (KR)
(74) Representative: Plasseraud IP
(86) International application number: PCT/KR2022/000823
(87) International publication number: WO 2022/154619

(56) References cited:
- EP-A1- 3 657 721
- EP-A1- 3 735 074
- WO-A1-2020/032779
- WO-A1-2020/111686
- WO-A1-2020/166728
- KR-A- 20200 018 397
- US-A1- 2021 014 026
- MODERATOR (LG ELECTRONICS): "Summary#2 on maintenance of other aspects for URLLC/IIOT", vol. RAN WG1, no. e-Meeting; 20200420 - 20200430, 18 April 2020 (2020-04-18), XP052342791, Retrieved from the Internet <URL:https://ftp.3gpp.org/tsg_ran/WG1_RL1/TSGR1_100b_e/Docs/R1-2002721.zip R1-2002721 Summary#2 of 7.2.5.7 others.docx> [retrieved on 20200418]
- SAMSUNG: "Corrections on Ultra Reliable Low Latency Communications Enhancements", vol. RAN WG1, no. e-Meeting; 20200817 - 20200828, 7 September 2020 (2020-09-07), XP052340683, Retrieved from the Internet <URL:https://ftp.3gpp.org/tsg_ran/TSG_RAN/TSGR_89e/Docs/RP-201808.zip 38213_CR0139_(Rel-16)_ R1-2007471.docx> [retrieved on 20200907]
- LG ELECTRONICS: "Summary#3 on maintenance of other aspects for URLLC/IIOT", vol. RAN WG1, no. e-Meeting; 20200224 - 20200306, 5 March 2020 (2020-03-05), XP052344288, Retrieved from the Internet <URL:https://ftp.3gpp.org/tsg_ran/WG1_RL1/TSGR1_100_e/Docs/R1-2001225.zip R1-2001225 Summary#3 on maintenance of other aspects for URLLC,IIOT.docx> [retrieved on 20200305]
- QUALCOMM INCORPORATED: "TP for Enhancements to Scheduling and HARQ operation for NR-U", 3GPP DRAFT; R1-2004445, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. 20200525 - 20200605, 15 May 2020 (2020-05-15), Mobile Competence Centre ; 650, route des Lucioles ; F-06921 Sophia-Antipolis Cedex ; France , XP051886175

## Description

### TECHNICAL FIELD

The present disclosure relates to a wireless communication system.

### BACKGROUND ART

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like. US2021/014026 relates to methods for receiving HARQ-ACK information.

### DISCLOSURE

### TECHNICAL PROBLEM

As new radio communication technology has been introduced, the number of UEs to which a BS should provide services in a prescribed resource region is increasing and the volume of data and control information that the BS transmits/receives to/from the UEs to which the BS provides services is also increasing. Since the amount of resources available to the BS for communication with the UE(s) is limited, a new method for the BS to efficiently receive/transmit uplink/downlink data and/or uplink/downlink control information from/to the UE(s) using the limited radio resources is needed. In other words, due to increase in the density of nodes and/or the density of UEs, a method for efficiently using high-density nodes or high-density UEs for communication is needed.

A method to efficiently support various services with different requirements in a wireless communication system is also needed.

Overcoming delay or latency is an important challenge to applications, performance of which is sensitive to delay/latency.

In addition, an efficient HARQ feedback scheme considering time division duplex (TDD) related operations and semi-static scheduling is required.

The objects to be achieved with the present disclosure are not limited to what has been particularly described hereinabove and other objects not described herein will be more clearly understood by persons skilled in the art from the following detailed description.

### TECHNICAL SOLUTION

In one aspect of the present disclosure, provided herein is a method according to claim 1.

In another aspect of the present disclosure, provided herein is a user equipment according to claim 7.

In another aspect of the present disclosure, provided herein is a computer-readable storage medium according to claim 8.

In another aspect of the present disclosure, provided herein is a method according to claim 9.

In another aspect of the present disclosure, provided herein is a base station according to claim 10.

### ADVANTAGEOUS EFFECTS

According to some implementation(s) of the present disclosure, a wireless communication signal may be efficiently transmitted/received. Accordingly, the total throughput of a wireless communication system may be raised.

According to some implementation(s) of the present disclosure, various services with different requirements may be efficiently supported in a wireless communication system.

According to some implementation(s) of the present disclosure, delay/latency generated during radio communication between communication devices may be reduced.

According to some implementation(s) of the present disclosure, the BS may be allowed to request HARQ-ACK feedback on the HARQ process(es) related to the SPS PDSCHs.

According to some implementation(s) of the present disclosure, unnecessary PDSCH retransmissions may be reduced because the BS is allowed to perform only retransmission scheduling for SPS PDSCHs based on the HARQ process-based HARQ-ACK codebook related to the SPS PDSCHs.

In some implementation(s) of the present disclosure, a HARQ-ACK codebook may be provided based on the HARQ processes related to the SPS PDSCHs, which may reduce the signaling overhead related to the HARQ-ACK codebook.

The effects according to the present disclosure are not limited to what has been particularly described hereinabove and other effects not described herein will be more clearly understood by persons skilled in the art related to the present disclosure from the following detailed description.

### DESCRIPTION OF DRAWINGS

The accompanying drawings, which are included to provide a further understanding of the present disclosure, illustrate examples of implementations of the present disclosure and together with the detailed description serve to explain implementations of the present disclosure:
FIG. 1 illustrates an example of a communication system 1 to which implementations of the present disclosure are applied;
FIG. 2 is a block diagram illustrating examples of communication devices capable of performing a method according to the present disclosure;
FIG. 3 illustrates another example of a wireless device capable of performing implementation(s) of the present disclosure;
FIG. 4 illustrates an example of a frame structure used in a 3rd generation partnership project (3GPP)-based wireless communication system;
FIG. 5 illustrates a resource grid of a slot;
FIG. 6 illustrates slot structures used in a 3GPP-based system;
FIG. 7 illustrates an example of physical downlink shared channel (PDSCH) time domain resource assignment (TDRA) caused by a physical downlink control channel (PDCCH) and an example of physical uplink shared channel (PUSCH) TDRA caused by the PDCCH;
FIG. 8 illustrates a hybrid automatic repeat request-acknowledgement (HARQ-ACK) transmission/reception procedure;
FIG. 9 illustrates an example of a HARQ process-based HARQ-ACK codebook according to some implementations of the present disclosure;
FIG. 10 illustrates an example of the flow of UE operations according to some implementations of the present disclosure;
FIG. 11 illustrates another example of a HARQ process-based HARQ-ACK codebook according to some implementations of the present disclosure;
FIG. 12 illustrates another example of a HARQ process-based HARQ-ACK codebook according to some implementations of the present disclosure; and
FIG. 13 illustrates an example of the flow of BS operations according to some implementations of the present disclosure.

### MODE FOR INVENTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, a multi-carrier frequency division multiple access (MC-FDMA) system, etc. CDMA may be implemented by radio technology such as universal terrestrial radio access (UTRA) or CDMA2000. TDMA may be implemented by radio technology such as global system for mobile communications (GSM), general packet radio service (GPRS), enhanced data rates for GSM evolution (EDGE) (i.e., GERAN), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.331, etc.

In examples of the present disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the present disclosure, a cell refers to a specific geographical area in which one or more nodes provide communication services. Accordingly, in the present disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection re-establishment/handover, one serving cell provides security input. This cell is referred to as a primary cell (Pcell). The Pcell refers to a cell operating on a primary frequency on which the UE performs an initial connection establishment procedure or initiates a connection re-establishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (UL PCC). A carrier corresponding to the Scell on DL is referred to as a downlink secondary CC (DL SCC), and a carrier corresponding to the Scell on UL is referred to as an uplink secondary CC (UL SCC).

For dual connectivity (DC) operation, the term SpCell refers to the Pcell of a master cell group (MCG) or the Pcell of a secondary cell group (SCG). The SpCell supports PUCCH transmission and contention-based random access and is always activated. The MCG is a group of service cells associated with a master node (e.g., BS) and includes the SpCell (Pcell) and optionally one or more Scells. For a UE configured with DC, the SCG is a subset of serving cells associated with a secondary node and includes a PSCell and 0 or more Scells. PSCell is a primary Scell of an SCG. For a UE in RRC _CONNECTED state, not configured with CA or DC, only one serving cell including only the Pcell is present. For a UE in RRC_CONNECTED state, configured with CA or DC, the term serving cells refers to a set of cells including SpCell(s) and all Scell(s). In DC, two medium access control (MAC) entities, i.e., one MAC entity for the MCG and one MAC entity for the SCG, are configured for the UE.

A UE with which CA is configured and DC is not configured may be configured with a Pcell PUCCH group, which includes the Pcell and 0 or more Scells, and an Scell PUCCH group, which includes only Scell(s). For the Scells, an Scell on which a PUCCH associated with the corresponding cell is transmitted (hereinafter, PUCCH cell) may be configured. An Scell indicated as the PUCCH Scell belongs to the Scell PUCCH group and PUCCH transmission of related UCI is performed on the PUCCH Scell. An Scell, which is not indicated as the PUCCH Scell or in which a cell indicated for PUCCH transmission is a Pcell, belongs to the Pcell PUCCH group and PUCCH transmission of related UCI is performed on the Pcell.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal (SS) are defined as the DL physical signals. The RS, which is also referred to as a pilot, represents a signal with a predefined special waveform known to both the BS and the UE. For example, a demodulation reference signal (DMRS), a channel state information RS (CSI-RS), etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, the PDCCH refers to a set of time-frequency resources (e.g., resource elements (REs)) that is a set of REs that carry downlink control information (DCI), and the PDSCH refers to a set of time-frequency resources that is a set of REs that carry DL data. The PUCCH, PUSCH, and PRACH refer to a set of time-frequency resources that is a set of time-frequency REs that carry uplink control information (UCI), UL data, and random access signals, respectively. In the following description, the meaning of "The UE transmits/receives the PUCCH/PUSCH/PRACH" is that the UE transmits/receives the UCI /UL data/random access signals on or through the PUCCH/PUSCH/PRACH, respectively. In addition, the meaning of "the BS transmits/receives the PBCH/PDCCH/PDSCH" is that the BS transmits the broadcast information/DCI/DL data on or through a PBCH/PDCCH/PDSCH, respectively.

In this specification, a radio resource (e.g., a time-frequency resource) scheduled or configured to the UE by the BS for transmission or reception of the PUCCH/PUSCH/PDSCH may be referred to as a PUCCH/PUSCH/PDSCH resource.

Since a communication device receives an SS/PBCH resource block (SSB), DMRS, CSI-RS, PBCH, PDCCH, PDSCH, PUSCH, and/or PUCCH in the form of radio signals on a cell, the communication device may not select and receive radio signals including only a specific physical channel or a specific physical signal through a radio frequency (RF) receiver, or may not select and receive radio signals without a specific physical channel or a specific physical signal through the RF receiver. In actual operations, the communication device receives radio signals on the cell via the RF receiver, converts the radio signals, which are RF band signals, into baseband signals, and then decodes physical signals and/or physical channels in the baseband signals using one or more processors. Thus, in some implementations of the present disclosure, reception of physical signals and/or physical channels may mean that a communication device does not attempt to restore the physical signals and/or physical channels from radio signals, for example, does not attempt to decode the physical signals and/or physical channels, rather than that the communication device does not actually receive the radio signals including the corresponding physical signals and/or physical channels.

As more and more communication devices have required greater communication capacity, there has been a need for eMBB communication relative to legacy radio access technology (RAT). In addition, massive MTC for providing various services at anytime and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the present disclosure, for convenience, the corresponding technology is referred to a new RAT (NR) or fifth-generation (5G) RAT, and a system using NR or supporting NR is referred to as an NR system.

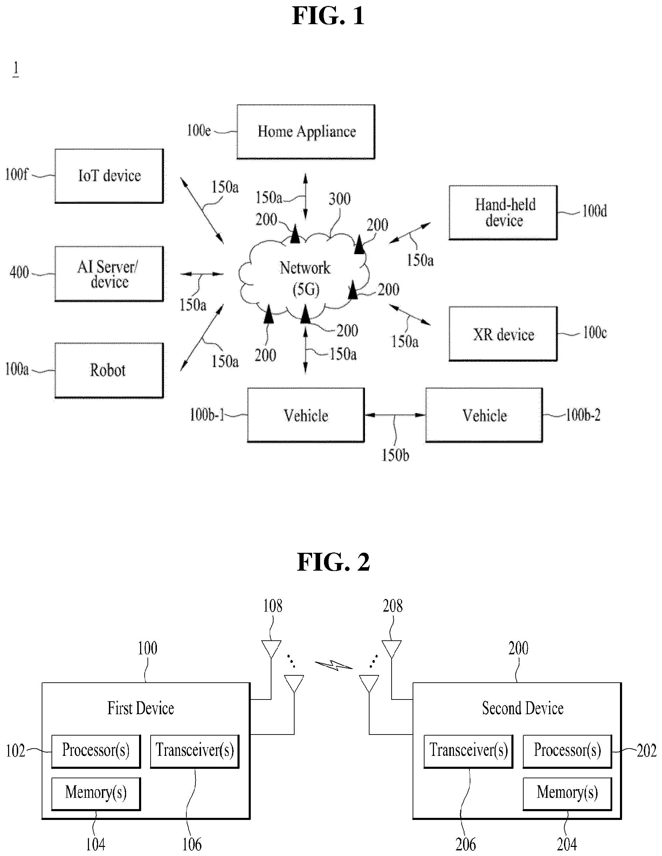

FIG. 1 illustrates an example of a communication system 1 to which implementations of the present disclosure are applied. Referring to FIG. 1, the communication system 1 applied to the present disclosure includes wireless devices, BSs, and a network. Here, the wireless devices represent devices performing communication using RAT (e.g., 5G NR or LTE (e.g., E-UTRA)) and may be referred to as communication/radio/SG devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 2 is a block diagram illustrating examples of communication devices capable of performing a method according to the present disclosure. Referring to FIG. 2, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the below-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the below-described/proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the below-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the below-described/proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

The wireless communication technology implemented in the wireless devices 100 and 200 of the present disclosure may include narrowband Internet of things for low-power communication as well as LTE, NR, and 6G. For example, the NB-IoT technology may be an example of low-power wide-area network (LPWAN) technologies and implemented in standards such as LTE Cat NB1 and/or LTE Cat NB2. However, the NB-IoT technology is not limited to the above names. Additionally or alternatively, the wireless communication technology implemented in the wireless devices XXX and YYY of the present disclosure may perform communication based on the LTE-M technology. For example, the LTE-M technology may be an example of LPWAN technologies and called by various names including enhanced machine type communication (eMTC). For example, the LTE-M technology may be implemented in at least one of the following various standards: 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, etc., but the LTE-M technology is not limited to the above names. Additionally or alternatively, the wireless communication technology implemented in the wireless devices XXX and YYY of the present disclosure may include at least one of ZigBee, Bluetooth, and LPWAN in consideration of low-power communication, but the wireless communication technology is not limited to the above names. For example, the ZigBee technology may create a personal area network (PAN) related to small/low-power digital communication based on various standards such as IEEE 802.15.4 and so on, and the ZigBee technology may be called by various names.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the present disclosure may be implemented using firmware or software, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

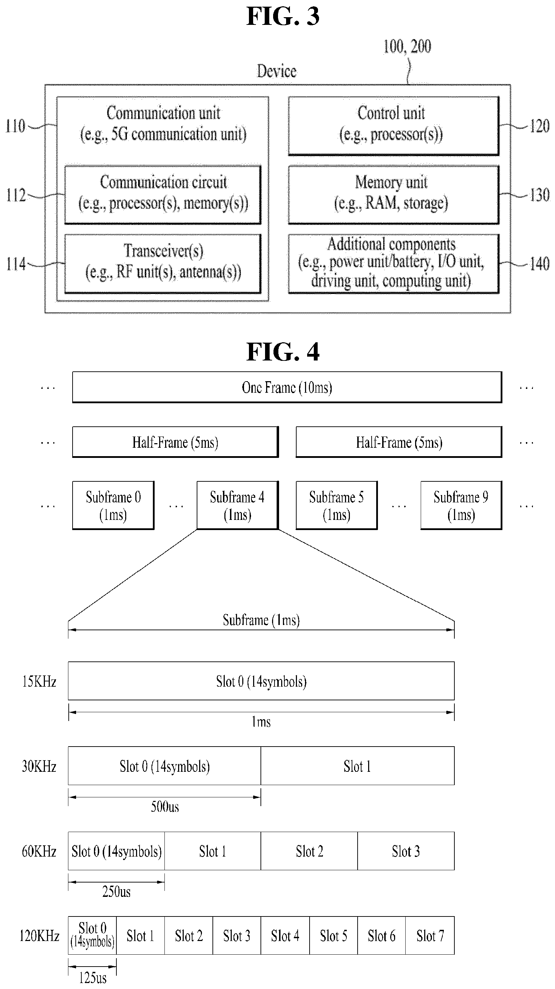

FIG. 3 illustrates another example of a wireless device capable of performing implementation(s) of the present disclosure. Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a volatile memory, a non-volatile memory, and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable (non-transitory) storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

In the present disclosure, a computer program may include program code stored on at least one computer-readable (non-volatile) storage medium and, when executed, configured to perform operations according to some implementations of the present disclosure or cause at least one processor to perform the operations according to some implementations of the present disclosure. The computer program may be provided in the form of a computer program product. The computer program product may include at least one computer-readable (non-volatile) storage medium.

A communication device of the present disclosure includes at least one processor; and at least one computer memory operably connected to the at least one processor and configured to store instructions for causing, when executed, the at least one processor to perform operations according to example(s) of the present disclosure described later.

FIG. 4 illustrates an example of a frame structure used in a 3GPP-based wireless communication system.

The frame structure of FIG. 4 is purely exemplary and the number of subframes, the number of slots, and the number of symbols, in a frame, may be variously changed. In an NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 4, in the NR system, UL and DL transmissions are organized into frames. Each frame has a duration of T_{f} = (Δfₘₐₓ*N_{f}/100)*T_{c} = 10 ms and is divided into two half-frames of 5 ms each. A basic time unit for NR is T_{c} = 1/(Δfₘₐₓ*N_{f}) where Δfₘₐₓ = 480*10³ Hz and N_{f}= 4096. For reference, a basic time unit for LTE is Tₛ = 1/(Δf_{ref}*N_{f,ref}) where Δf_{ref} = 15*10³ Hz and N_{f,ref}= 2048. T_{c} and T_{f} have the relationship of a constant κ = T_{c}/T_{f} = 64. Each half-frame includes 5 subframes and a duration T_{sf} of a single subframe is 1 ms. Subframes are further divided into slots and the number of slots in a subframe depends on a subcarrier spacing. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing Δf = 2^{u}*15 kHz. The table below shows the number of OFDM symbols (*N*^{slot}_{symb}) per slot, the number of slots (*N*^{frame,u}ₛₗₒₜ) per frame, and the number of slots (*N*^{subframe,u} ₛₗₒₜ) per subframe.

**Table 1**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

The table below shows the number of OFDM symbols per slot, the number of slots per frame, and the number of slots per subframe, according to the subcarrier spacing △f = 2^{u}*15 kHz.

**Table 2**

| u | *N*^{slot}_{symb} | *N*^{frame,u}ₛₗₒₜ | *N*^{subframe,u}ₛₗₒₜ |
|---|---|---|---|
| 2 | 12 | 40 | 4 |

For a subcarrier spacing configuration u, slots may be indexed within a subframe in ascending order as follows: n^{u}ₛ ∈ {0, ..., n^{subframe,u}ₛₗₒₜ - 1} and indexed within a frame in ascending order as follows: n^{u}_{s,f} ∈ {0, ..., n^{frame,u}ₛₗₒₜ - 1}.

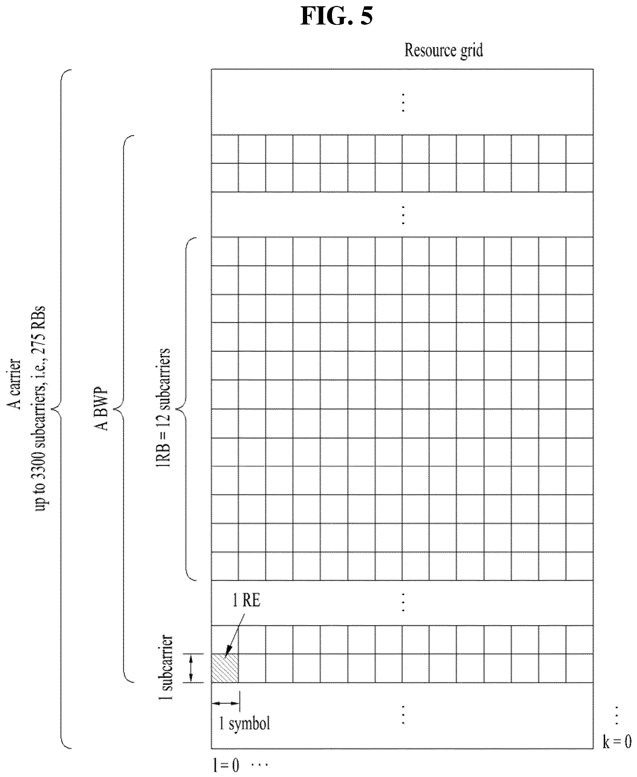

FIG. 5 illustrates a resource grid of a slot. The slot includes multiple (e.g., 14 or 12) symbols in the time domain. For each numerology (e.g., subcarrier spacing) and carrier, a resource grid of *N*^{size,u}_{grid,x}**N*^{RB}_{sc} subcarriers and *N*^{subframe,u}_{symb} OFDM symbols is defined, starting at a common resource block (CRB) *N*^{start,u}_{grid} indicated by higher layer signaling (e.g. RRC signaling), where *N*^{size,u}_{grid,x} is the number of resource blocks (RBs) in the resource grid and the subscript x is DL for downlink and UL for uplink. *N*^{RB}_{sc} is the number of subcarriers per RB. In the 3GPP-based wireless communication system, *N*^{RB}_{sc} is typically 12. There is one resource grid for a given antenna port *p,* a subcarrier spacing configuration *u,* and a transmission link (DL or UL). The carrier bandwidth *N*^{size,u}_{grid} for the subcarrier spacing configuration u is given to the UE by a higher layer parameter (e.g. RRC parameter). Each element in the resource grid for the antenna port *p* and the subcarrier spacing configuration *u* is referred to as a resource element (RE) and one complex symbol may be mapped to each RE. Each RE in the resource grid is uniquely identified by an index *k* in the frequency domain and an index *l* representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the subcarrier spacing configuration u. The center of subcarrier 0 of CRB 0 for the subcarrier spacing configuration *u* is equal to 'Point A' which serves as a common reference point for RB grids. The PRBs for subcarrier spacing configuration *u* are defined within a bandwidth part (BWP) and numbered from 0 to *N*^{size,u}_{BWP,i}-1, where i is a number of the BWP. The relation between a PRB n_{PRB} in a BWP i and a CRB n^{u}_{CRB} is given by: n^{u}_{PRB} = n^{u}_{CRB} + *N*^{size,u}_{BWP,i}, where *N*^{size}_{BWP,i} is a CRB in which the BWP starts relative to CRB 0. The BWP includes a plurality of consecutive RBs in the frequency domain. For example, the BWP may be a subset of contiguous CRBs defined for a given numerology uᵢ in the BWP i on a given carrier. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

For each serving cell in a set of DL BWPs or UL BWPs, the network may configure at least an initial DL BWP and one (if the serving cell is configured with uplink) or two (if supplementary uplink is used) initial UL BWPs. The network may configure additional UL and DL BWPs. For each DL BWP or UL BWP, the UE may be provided the following parameters for the serving cell: i) an SCS; ii) a CP; iii) a CRB *N*^{start}_{BWP} = *O*_{carrier} + *RB*ₛₜₐᵣₜ and the number of contiguous RBs *N*^{size}_{BWP} = *L*_{RB} provided by an RRC parameter *locationAndBandwidth,* which indicates an offset *RB*ₛₑₜ and a length *L*_{RB} as a resource indicator value (RIV) on the assumption of *N*^{start}_{BWP} = 275, and a value *O*_{carrier} provided by an RRC parameter *offsetToCarrier* for the SCS; an index in the set of DL BWPs or UL BWPs; a set of BWP-common parameters; and a set of BWP-dedicated parameters.

Virtual resource blocks (VRBs) may be defined within the BWP and indexed from 0 to *N*^{size,u}_{BWP,i}-1, where i denotes a BWP number. The VRBs may be mapped to PRBs according to non-interleaved mapping. In some implementations, VRB n may be mapped to PRB n for non-interleaved VRB-to-PRB mapping.

The UE for which carrier aggregation is configured may be configured to use one or more cells. If the UE is configured with a plurality of serving cells, the UE may be configured with one or multiple cell groups. The UE may also be configured with a plurality of cell groups associated with different BSs. Alternatively, the UE may be configured with a plurality of cell groups associated with a single BS. Each cell group of the UE includes one or more serving cells and includes a single PUCCH cell for which PUCCH resources are configured. The PUCCH cell may be a Pcell or an Scell configured as the PUCCH cell among Scells of a corresponding cell group. Each serving cell of the UE belongs to one of cell groups of the UE and does not belong to a plurality of cells.

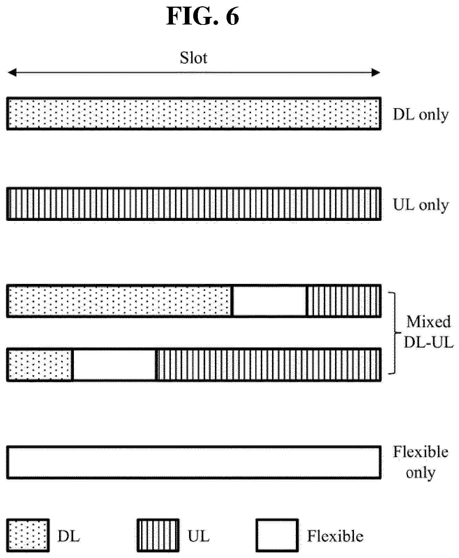

FIG. 6 illustrates slot structures used in a 3GPP-based system. In all 3GPP-based systems, for example, in an NR system, each slot may have a self-contained structure including i) a DL control channel, ii) DL or UL data, and/or iii) a UL control channel. For example, the first N symbols in a slot may be used to transmit the DL control channel (hereinafter, DL control region) and the last M symbols in a slot may be used to transmit the UL control channel (hereinafter, UL control region), where N and M are integers other than negative numbers. A resource region (hereinafter, data region) between the DL control region and the UL control region may be used to transmit DL data or UL data. Symbols in a single slot may be divided into group(s) of consecutive symbols that may be used as DL symbols, UL symbols, or flexible symbols. Hereinbelow, information indicating how each symbol in slot(s) is used will be referred to as a slot format. For example, which symbols in slot(s) are used for UL and which symbols in slot(s) are used for DL may be defined by a slot format.

When a BS intends to operate a serving cell in time division duplex (TDD) mode, the BS may configure a pattern for UL and DL allocation for the serving cell through higher layer (e.g., RRC) signaling. For example, the following parameters may be used to configure a TDD DL-UL pattern:
- *dl-UL-TransmissionPeriodicity* that provides a periodicity of the DL-UL pattern;
- *nrofDownlinkSlots* that provides the number of consecutive full DL slots at the beginning of each DL-UL pattern, where the full DL slots are slots having only DL symbols;
- *nrofDownlinkSymbols* that provides the number of consecutive DL symbols at the beginning of a slot immediately following the last full DL slot;
- *nrofUplinkSlots* that provides the number of consecutive full UL slots at the end of each DL-UL pattern, where the full UL slots are slots having only UL symbols; and
- *nrofUplinkSymbols* that provides the number of consecutive UL symbols in the end of a slot immediately preceding the first full UL slot.

The remaining symbols that are not configured as either DL symbols or UL symbols among symbols in the DL-UL pattern are flexible symbols.

If the UE is provided with a configuration for the TDD DL-UL pattern, i.e., a TDD UL-DL configuration (e.g., *tdd-UL-DL-ConfigurationCommon,* or *tdd-UL-DLConfigurationDedicated*), through higher layer signaling, the UE sets a slot format per slot over a number of slots based on the configuration.

For symbols, although there may be various combinations of DL symbols, UL symbols, and flexible symbols, a predetermined number of combinations may be predefined as slot formats and the predefined slot formats may be respectively identified by slot format indexes. The following table shows a part of the predefined slot formats. In the table below, D denotes a DL symbol, U denotes a UL symbol, and F denotes a flexible symbol.

**Table 3**

| **Format** | **Symbol number in a slot** | | | | | | | | | | | | | |
|---|---|---|---|---|---|---|---|---|---|---|---|---|---|---|
| | **0** | **1** | **2** | **3** | **4** | **5** | **6** | **7** | **8** | **9** | **10** | **11** | **12** | **13** |
| **0** | **D** | **D** | **D** | **D** | **D** | **D** | **D** | **D** | **D** | **D** | **D** | **D** | **D** | **D** |
| **1** | **U** | **U** | **U** | **U** | **U** | **U** | **U** | **U** | **U** | **U** | **U** | **U** | **U** | **U** |
| **2** | **F** | **F** | **F** | **F** | **F** | **F** | **F** | **F** | **F** | **F** | **F** | **F** | **F** | **F** |
| **3** | **D** | **D** | **D** | **D** | **D** | **D** | **D** | **D** | **D** | **D** | **D** | **D** | **D** | **F** |
| **4** | **D** | **D** | **D** | **D** | **D** | **D** | **D** | **D** | **D** | **D** | **D** | **D** | **F** | **F** |
| **5** | **D** | **D** | **D** | **D** | **D** | **D** | **D** | **D** | **D** | **D** | **D** | **F** | **F** | **F** |
| **6** | **D** | **D** | **D** | **D** | **D** | **D** | **D** | **D** | **D** | **D** | **F** | **F** | **F** | **F** |
| **7** | **D** | **D** | **D** | **D** | **D** | **D** | **D** | **D** | **D** | **F** | **F** | **F** | **F** | **F** |
| **8** | **F** | **F** | **F** | **F** | **F** | **F** | **F** | **F** | **F** | **F** | **F** | **F** | **F** | **U** |
| **9** | **F** | **F** | **F** | **F** | **F** | **F** | **F** | **F** | **F** | **F** | **F** | **F** | **U** | **U** |
| **10** | **F** | **U** | **U** | **U** | **U** | **U** | **U** | **U** | **U** | **U** | **U** | **U** | **U** | **U** |
| **11** | **F** | **F** | **U** | **U** | **U** | **U** | **U** | **U** | **U** | **U** | **U** | **U** | **U** | **U** |
| **12** | **F** | **F** | **F** | **U** | **U** | **U** | **U** | **U** | **U** | **U** | **U** | **U** | **U** | **U** |
| **13** | **F** | **F** | **F** | **F** | **U** | **U** | **U** | **U** | **U** | **U** | **U** | **U** | **U** | **U** |
| **14** | **F** | **F** | **F** | **F** | **F** | **U** | **U** | **U** | **U** | **U** | **U** | **U** | **U** | **U** |
| **15** | **F** | **F** | **F** | **F** | **F** | **F** | **U** | **U** | **U** | **U** | **U** | **U** | **U** | **U** |
| **16** | **D** | **F** | **F** | **F** | **F** | **F** | **F** | **F** | **F** | **F** | **F** | **F** | **F** | **F** |
| **17** | **D** | **D** | **F** | **F** | **F** | **F** | **F** | **F** | **F** | **F** | **F** | **F** | **F** | **F** |
| **18** | **D** | **D** | **D** | **F** | **F** | **F** | **F** | **F** | **F** | **F** | **F** | **F** | **F** | **F** |
| **19** | **D** | **F** | **F** | **F** | **F** | **F** | **F** | **F** | **F** | **F** | **F** | **F** | **F** | **U** |
| **20** | **D** | **D** | **F** | **F** | **F** | **F** | **F** | **F** | **F** | **F** | **F** | **F** | **F** | **U** |
| **...** | **.. .** | | | | | | | | | | | | | |

To indicate which slot format is used in a specific slot among the predefined slot formats, the BS may configure a set of slot format combinations applicable to a corresponding serving cell per cell with respect to a set of serving cells through higher layer (e.g., RRC) signaling and cause the UE to monitor a group-common PDCCH for slot format indicator(s) (SFI(s)) through higher layer (e.g., RRC) signaling. Hereinafter, DCI carried by the group-common PDCCH for the SFI(s) will be referred to as SFI DCI. DCI format 2_0 is used as the SFI DCI. For example, for each serving cell in a set of serving cells, the BS may provide the UE with the (start) position of a slot format combination ID (i.e., SFI-index) for a corresponding serving cell in the SFI DCI, a set of slot format combinations applicable to the serving cell, and a reference subcarrier spacing configuration for each slot format in a slot format combination indicated by an SFI-index value in the SFI DCI. One or more slot formats are configured for each slot format combination in the set of the slot format combinations and the slot format combination ID (i.e., SFI-index) is assigned to the slot format combination. For example, when the BS intends to configure the slot format combination with N slot formats, N slot format indexes among slot format indexes for the predefined slot formats (e.g., see Table 3) may be indicated for the slot format combination. To configure the UE to monitor the group-common PDCCH for SFIs, the BS informs the UE of the total length of the DCI payload with the radio network temporary identifier (RNTI) used for SFIs, SFI-RNTI, and the CRC scrambled with the SFI-RNTI. Upon detecting the PDCCH based on the SFI-RNTI, the UE may determine slot format(s) for the corresponding serving cell from an SFI-index for the serving cell among SFI-indexes in the DCI payload in the PDCCH.

Symbols indicated as flexible symbols by the TDD DL-UL pattern configuration may be indicated as UL symbols, DL symbols, or flexible symbols by the SFI DCI. Symbols indicated as the DL/UL symbols by the TDD DL-UL pattern configuration are not overridden as the UL/DL symbols or the flexible symbols by the SFI DCI.

If the TDD DL-UL pattern is not configured, the UE determines whether each slot is used for UL or DL and determines symbol allocation in each slot based on the SFI DCI and/or on DCI for scheduling or triggering DL or UL signal transmission (e.g., DCI format 1_0, DCI format 1_1, DCI format 1_2, DCI format 0_0, DCI format 0_1, DCI format 0_2, or DCI format 2_3).

NR frequency bands are defined as two types of frequency ranges, i.e., FR1 and FR2. FR2 is also referred to as millimeter wave (mmW). The following table shows frequency ranges within which NR may operate.

**Table 4**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Hereinafter, physical channels that may be used in the 3GPP-based wireless communication system will be described in detail.

A PDCCH carries DCI. For example, the PDCCH (i.e., DCI) carries information about transport format and resource allocation of a downlink shared channel (DL-SCH), information about resource allocation of an uplink shared channel (UL-SCH), paging information about a paging channel (PCH), system information about the DL-SCH, information about resource allocation for a control message, such as a random access response (RAR) transmitted on a PDSCH, of a layer (hereinafter, higher layer) positioned higher than a physical layer among protocol stacks of the UE/BS, a transmit power control command, information about activation/deactivation of configured scheduling (CS), etc. DCI including resource allocation information on the DL-SCH is called PDSCH scheduling DCI, and DCI including resource allocation information on the UL-SCH is called PUSCH scheduling DCI. The DCI includes a cyclic redundancy check (CRC). The CRC is masked/scrambled with various identifiers (e.g., radio network temporary identifier (RNTI)) according to an owner or usage of the PDCCH. For example, if the PDCCH is for a specific UE, the CRS is masked with a UE identifier (e.g., cell-RNTI (C-RNTI)). If the PDCCH is for a paging message, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

When a PDCCH on one serving cell schedules a PDSCH or a PUSCH on another serving cell, it is referred to cross-carrier scheduling. Cross-carrier scheduling with a carrier indicator field (CIF) may allow a PDCCH on a serving cell to schedule resources on another serving cell. When a PDSCH on a serving cell schedules a PDSCH or a PUSCH on the serving cell, it is referred to as self-carrier scheduling. When the cross-carrier scheduling is used in a cell, the BS may provide information about a cell scheduling the cell to the UE. For example, the BS may inform the UE whether a serving cell is scheduled by a PDCCH on another (scheduling) cell or scheduled by the serving cell. If the serving cell is scheduled by the other (scheduling) cell, the BS may inform the UE which cell signals DL assignments and UL grants for the serving cell. In the present disclosure, a cell carrying a PDCCH is referred to as a scheduling cell, and a cell where transmission of a PUSCH or a PDSCH is scheduled by DCI included in the PDCCH, that is, a cell carrying the PUSCH or PDSCH scheduled by the PDCCH is referred to as a scheduled cell.

A PDSCH is a physical layer UL channel for UL data transport. The PDSCH carries DL data (e.g., DL-SCH transport block) and is subjected to modulation such as quadrature phase shift keying (QPSK), 16 quadrature amplitude modulation (QAM), 64 QAM, 256 QAM, etc. A codeword is generated by encoding a transport block (TB). The PDSCH may carry a maximum of two codewords. Scrambling and modulation mapping per codeword may be performed and modulation symbols generated from each codeword may be mapped to one or more layers. Each layer is mapped to a radio resource together with a DMRS and generated as an OFDM symbol signal. Then, the OFDM symbol signal is transmitted through a corresponding antenna port.

A PUCCH is a physical layer UL channel for uplink control information (UCI) transmission. The PUCCH carries UCI. UCI types transmitted on the PUCCH include hybrid automatic repeat request acknowledgement (HARQ-ACK) information, a scheduling request (SR), and channel state information (CSI). UCI bits include HARQ-ACK information bits if present, SR information bits if present, link recovery request (LRR) information bits if present, and CSI bits if present. In the present disclosure, HARQ-ACK information bits correspond to a HARQ-ACK codebook. In particular, a bit sequence in which HARQ-ACK information bits are arranged according to a predetermined rule is called a HARQ-ACK codebook.
- Scheduling request (SR): Information that is used to request a UL-SCH resource.
- Hybrid automatic repeat request (HARQ) - acknowledgment (ACK): A response to a DL data packet (e.g., codeword) on the PDSCH. HARQ-ACK indicates whether the DL data packet has been successfully received by a communication device. In response to a single codeword, 1-bit HARQ-ACK may be transmitted. In response to two codewords, 2-bit HARQ-ACK may be transmitted. The HARQ-ACK response includes positive ACK (simply, ACK), negative ACK (NACK), discontinuous transmission (DTX), or NACK/DTX. Here, the term HARQ-ACK is used interchangeably with HARQ ACK/NACK, ACK/NACK, or A/N.
- Channel state information (CSI): Feedback information about a DL channel. The CSI may include channel quality information (CQI), a rank indicator (RI), a precoding matrix indicator (PMI), a CSI-RS resource indicator (CSI), an SS/PBCH resource block indicator (SSBRI), and a layer indicator (L1). The CSI may be classified into CSI part 1 and CSI part 2 according to UCI type included in the CSI. For example, the CRI, RI, and/or the CQI for the first codeword may be included in CSI part 1, and LI, PMI, and/or the CQI for the second codeword may be included in CSI part 2.
- Link recovery request (LRR)

In the present disclosure, for convenience, PUCCH resources configured/indicated for/to the UE by the BS for HARQ-ACK, SR, and CSI transmission are referred to as a HARQ-ACK PUCCH resource, an SR PUCCH resource, and a CSI PUCCH resource, respectively.

PUCCH formats may be defined as follows according to UCI payload sizes and/or transmission lengths (e.g., the number of symbols included in PUCCH resources). In regard to the PUCCH formats, reference may also be made to Table 5.

### (0) PUCCH format 0 (PF0 or F0)

- Supported UCI payload size: up to K bits (e.g., K=2)
- Number of OFDM symbols constituting a single PUCCH: 1 to X symbols (e.g., X=2)
- Transmission structure: Only a UCI signal without a DMRS is included in PUCCH format 0. The UE transmits a UCI state by selecting and transmitting one of a plurality of sequences. For example, the UE transmits specific UCI to the BS by transmitting one of a plurality of sequences through a PUCCH, which is PUCCH format 0. The UE transmits the PUCCH, which is PUCCH format 0, in PUCCH resources for a corresponding SR configuration only upon transmitting a positive SR.
- Configuration for PUCCH format 0 includes the following parameters for a corresponding PUCCH resource: an index for initial cyclic shift, the number of symbols for PUCCH transmission, and/or the first symbol for PUCCH transmission.

### (1) PUCCH format 1 (PF1 or F1)

- Supported UCI payload size: up to K bits (e.g., K=2)
- Number of OFDM symbols constituting a single PUCCH: Y to Z symbols (e.g., Y=4 and Z=14)
- Transmission structure: The DMRS and UCI are configured/mapped in TDM in/to different OFDM symbols. In other words, the DMRS is transmitted in symbols in which modulation symbols are not transmitted and the UCI is represented as the product between a specific sequence (e.g., orthogonal cover code (OCC)) and a modulation (e.g., QPSK) symbol. Code division multiplexing (CDM) is supported between a plurality of PUCCH resources (conforming to PUCCH format 1) (within the same RB) by applying cyclic shifts (CSs)/OCCs to both the UCI and the DMRS. PUCCH format 1 carries the UCI of up to 2 bits and the modulation symbols are spread by the OCC (differently configured depending on whether frequency hopping is performed) in the time domain.
- Configuration for PUCCH format 1 includes the following parameters for a corresponding PUCCH resource: an index for initial cyclic shift, the number of symbols for PUCCH transmission, the first symbol for PUCCH transmission, and/or an index for the OCC.

### (2) PUCCH format 2 (PF2 or F2)

- Supported UCI payload size: more than K bits (e.g., K=2)
- Number of OFDM symbols constituting a single PUCCH: 1 to X symbols (e.g., X=2)
- Transmission structure: The DMRS and UCI are configured/mapped using frequency division multiplexing (FDM) within the same symbol. The UE transmits the UCI by applying only IFFT without DFT to encoded UCI bits. PUCCH format 2 carries UCI of a larger bit size than K bits and modulation symbols are subjected to FDM with the DMRS, for transmission. For example, the DMRS is located in symbol indexes #1, #4, #7, and #10 within a given RB with the density of 1/3. A pseudo noise (PN) sequence is used for a DMRS sequence. Frequency hopping may be activated for 2-symbol PUCCH format 2.
- Configuration for PUCCH format 2 includes the following parameters for a corresponding PUCCH resource: the number of PRBs, the number of symbols for PUCCH transmission, and/or the first symbol for PUCCH transmission.

### (3) PUCCH format 3 (PF3 or F3)

- Supported UCI payload size: more than K bits (e.g., K=2)
- Number of OFDM symbols constituting a single PUCCH: Y to Z symbols (e.g., Y=4 and Z=14)
- Transmission structure: The DMRS and UCI are configured/mapped in TDM for/to different OFDM symbols. The UE transmits the UCI by applying DFT to encoded UCI bits. PUCCH format 3 does not support UE multiplexing for the same time-frequency resource (e.g., same PRB).

Configuration for PUCCH format 3 includes the following parameters for a corresponding PUCCH resource: the number of PRBs, the number of symbols for PUCCH transmission, and/or the first symbol for PUCCH transmission.

### (4) PUCCH format 4 (PF4 or F4)

- Supported UCI payload size: more than K bits (e.g., K=2)
- Number of OFDM symbols constituting a single PUCCH: Y to Z symbols (e.g., Y=4 and Z=14)
- Transmission structure: The DMRS and UCI are configured/mapped in TDM for/to different OFDM symbols. PUCCH format 4 may multiplex up to 4 UEs in the same PRB, by applying an OCC at the front end of DFT and applying a CS (or interleaved FDM (IFDM) mapping) to the DMRS. In other words, modulation symbols of the UCI are subjected to TDM with the DMRS, for transmission.
- Configuration for PUCCH format 4 includes the following parameters for a corresponding PUCCH resource: the number of symbols for PUCCH transmission, length for the OCC, an index for the OCC, and the first symbol for PUCCH transmission.

The table below shows the PUCCH formats. The PUCCH formats may be divided into short PUCCH formats (formats 0 and 2) and long PUCCH formats (formats 1, 3, and 4) according to PUCCH transmission length.

**Table 5**

| PUCCH format | Length in OFDM symbols N^{PCCCH}_{symb} | Number of bits | Usage | Etc. |
|---|---|---|---|---|
| 0 | 1 - 2 | =<2 | HARQ, SR | Sequence selection |
| 1 | 4-14 | =<2 | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM(no UE multiplexing) |
| 4 | 4-14 | >2 | HARQ, CSI, [SR] | DFT-s-OFDM(Pre DFT OCC) |

A PUCCH resource may be determined according to a UCI type (e.g., A/N, SR, or CSI). A PUCCH resource used for UCI transmission may be determined based on a UCI (payload) size. For example, the BS may configure a plurality of PUCCH resource sets for the UE, and the UE may select a specific PUCCH resource set corresponding to a specific range according to the range of the UCI (payload) size (e.g., numbers of UCI bits). For example, the UE may select one of the following PUCCH resource sets according to the number of UCI bits, N_{UCI}.
- PUCCH resource set #0, if the number of UCI bits =< 2
- PUCCH resource set #1, if 2< the number of UCI bits =< N₁
   ...
- PUCCH resource set #(K-1), if N_{K-2} < the number of UCI bits =< N_{K-1}

Here, K represents the number of PUCCH resource sets (K> 1) and Nᵢ represents a maximum number of UCI bits supported by PUCCH resource set #i. For example, PUCCH resource set #1 may include resources of PUCCH formats 0 to 1, and the other PUCCH resource sets may include resources of PUCCH formats 2 to 4 (see Table 6).

Configuration for each PUCCH resource includes a PUCCH resource index, a start PRB index, and configuration for one of PUCCH format 0 to PUCCH format 4. The UE is configured with a code rate for multiplexing HARQ-ACK, SR, and CSI report(s) within PUCCH transmission using PUCCH format 2, PUCCH format 3, or PUCCH format 4, by the BS through a higher layer parameter maxCodeRate. The higher layer parameter maxCodeRate is used to determine how to feed back the UCI on PUCCH resources for PUCCH format 2, 3, or 4.

If the UCI type is SR and CSI, a PUCCH resource to be used for UCI transmission in a PUCCH resource set may be configured for the UE through higher layer signaling (e.g., RRC signaling). If the UCI type is HARQ-ACK for a semi-persistent scheduling (SPS) PDSCH, the PUCCH resource to be used for UCI transmission in the PUCCH resource set may be configured for the UE through higher layer signaling (e.g., RRC signaling). On the other hand, if the UCI type is HARQ-ACK for a PDSCH scheduled by DCI, the PUCCH resource to be used for UCI transmission in the PUCCH resource set may be scheduled by the DCI.

In the case of DCI-based PUCCH resource scheduling, the BS may transmit the DCI to the UE on a PDCCH and indicate a PUCCH resource to be used for UCI transmission in a specific PUCCH resource set by an ACK/NACK resource indicator (ARI) in the DCI. The ARI may be used to indicate a PUCCH resource for ACK/NACK transmission and also be referred to as a PUCCH resource indicator (PRI). Here, the DCI may be used for PDSCH scheduling and the UCI may include HARQ-ACK for a PDSCH. The BS may configure a PUCCH resource set including a larger number of PUCCH resources than states representable by the ARI by (UE-specific) higher layer (e.g., RRC) signaling for the UE. The ARI may indicate a PUCCH resource subset of the PUCCH resource set and which PUCCH resource in the indicated PUCCH resource subset is to be used may be determined according to an implicit rule based on transmission resource information about the PDCCH (e.g., the starting CCE index of the PDCCH).

For UL-SCH data transmission, the UE should include UL resources available for the UE and, for DL-SCH data reception, the UE should include DL resources available for the UE. The UL resources and the DL resources are assigned to the UE by the BS through resource allocation. Resource allocation may include time domain resource allocation (TDRA) and frequency domain resource allocation (FDRA). In the present disclosure, UL resource allocation is also referred to as a UL grant and DL resource allocation is referred to as DL assignment. The UL grant is dynamically received by the UE on the PDCCH or in RAR or semi-persistently configured for the UE by the BS through RRC signaling. DL assignment is dynamically received by the UE on the PDCCH or semi-persistently configured for the UE by the BS through RRC signaling.

On UL, the BS may dynamically allocate UL resources to the UE through PDCCH(s) addressed to a cell radio network temporary Identifier (C-RNTI). The UE monitors the PDCCH(s) in order to discover possible UL grant(s) for UL transmission. The BS may allocate the UL resources using a configured grant to the UE. Two types of configured grants, Type 1 and Type 2, may be used. In Type 1, the BS directly provides the configured UL grant (including periodicity) through RRC signaling. In Type 2, the BS may configure a periodicity of an RRC-configured UL grant through RRC signaling and signal, activate, or deactivate the configured UL grant through the PDCCH addressed to a configured scheduling RNTI (CS-RNTI). For example, in Type 2, the PDCCH addressed to the CS-RNTI indicates that the corresponding UL grant may be implicitly reused according to the configured periodicity through RRC signaling until deactivation.

On DL, the BS may dynamically allocate DL resources to the UE through PDCCH(s) addressed to the C-RNTI. The UE monitors the PDCCH(s) in order to discover possible DL grant(s). The BS may allocate the DL resources to the UE using SPS. The BS may configure a periodicity of configured DL assignment through RRC signaling and signal, activate, or deactivate the configured DL assignment through the PDCCH addressed to the CS-RNTI. For example, the PDCCH addressed to the CS-RNTI indicates that the corresponding DL assignment may be implicitly reused according to the configured periodicity through RRC signaling until deactivation.

Hereinafter, resource allocation by the PDCCH and resource allocation by RRC will be described in more detail.

### * Resource Allocation by PDCCH: dynamic grant/assignment

The PDCCH may be used to schedule DL transmission on the PDSCH and UL transmission on the PUSCH. DCI on the PDCCH for scheduling DL transmission may include DL resource assignment that at least includes a modulation and coding format (e.g., modulation and coding scheme (MCS)) index *I*_{MCS}), resource allocation, and HARQ information, associated with a DL-SCH. DCI on the PDCCH for scheduling UL transmission may include a UL scheduling grant that at least includes a modulation and coding format, resource allocation, and HARQ information, associated with a UL-SCH. HARQ information on a DL-SCH or UL-SCH may include a new information indicator (NDI), transport block size (TBS), redundancy version (RV), and HARQ process ID (i.e., HARQ process number). The size and usage of the DCI carried by one PDCCH differs according to a DCI format. For example, DCI format 0_0, DCI format 0_1, or DCI format 0_2 may be used to schedule the PUSCH, and DCI format 1_0, DCI format 1_1, or DCI format 1_2 may be used to schedule the PDSCH. Particularly, DCI format 0_2 and DCI format 1_2 may be used to schedule transmission having higher transmission reliability and lower latency requirements than transmission reliability and latency requirement guaranteed by DCI format 0_0, DCI format 0_1, DCI format 1_0, or DCI format 1_1. Some implementations of the present disclosure may be applied to UL data transmission based on DCL format 0_2. Some implementations of the present disclosure may be applied to DL data reception based on DCI format 1_2.

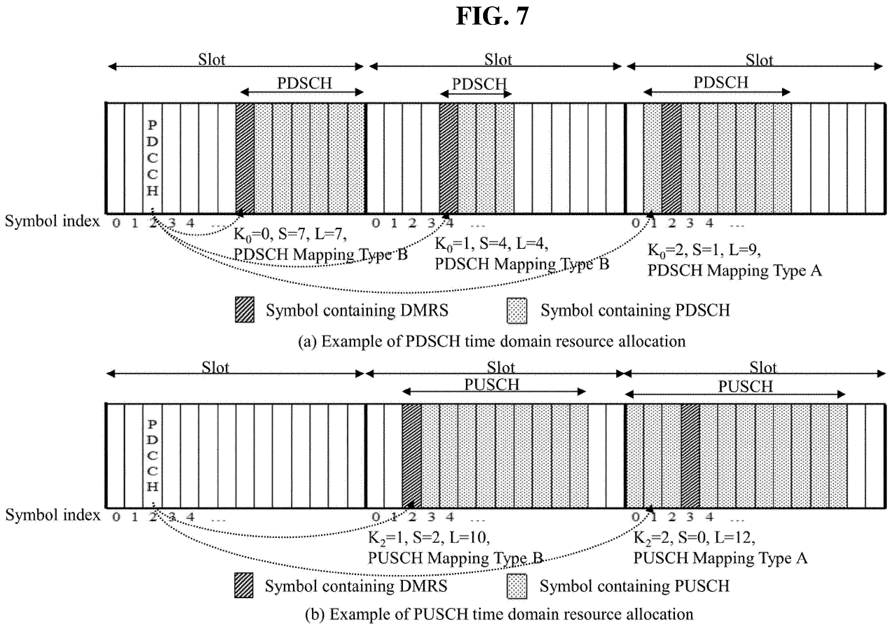

FIG. 7 illustrates an example of PDSCH TDRA caused by a PDCCH and an example of PUSCH TDRA caused by the PDCCH.

DCI carried by the PDCCH in order to schedule a PDSCH or a PUSCH includes a TDRA field. The TDRA field provides a value m for a row index m+1 to an allocation table for the PDSCH or the PUSCH. Predefined default PDSCH time domain allocation is applied as the allocation table for the PDSCH or a PDSCH TDRA table that the BS configures through RRC signaled *pdsch-TimeDomainAllocationList* is applied as the allocation table for the PDSCH. Predefined default PUSCH time domain allocation is applied as the allocation table for the PUSCH or a PUSCH TDRA table that the BS configures through RRC signaled *pusch-TimeDomainAllocationList* is applied as the allocation table for the PUSCH. The PDSCH TDRA table to be applied and/or the PUSCH TDRA table to be applied may be determined according a fixed/predefined rule (e.g., refer to 3GPP TS 38.214).

In PDSCH time domain resource configurations, each indexed row defines a DL assignment-to-PDSCH slot offset *K*₀, a start and length indicator *SLIV* (or directly, a start position (e.g., start symbol index S) and an allocation length (e.g., the number of symbols, L) of the PDSCH in a slot), and a PDSCH mapping type. In PUSCH time domain resource configurations, each indexed row defines a UL grant-to-PUSCH slot offset *K*₂, a start position (e.g., start symbol index S) and an allocation length (e.g., the number of symbols, L) of the PUSCH in a slot, and a PUSCH mapping type. *K*₀ for the PDSCH and *K*₂ for the PUSCH indicate the difference between the slot with the PDCCH and the slot with the PDSCH or PUSCH corresponding to the PDCCH. *SLIV* denotes a joint indicator of the start symbol S relative to the start of the slot with the PDSCH or PUSCH and the number of consecutive symbols, *L*, counting from the symbol *S.* There are two PDSCH/PUSCH mapping types: one is mapping type A and the other is mapping type B. In the case of PDSCH/PUSCH mapping type A, a DMRS is mapped to a PDSCH/PUSCH resource with respect to the start of a slot. One or two of the symbols of the PDSCH/PUSCH resource may be used as DMRS symbol(s) according to other DMRS parameters. For example, in the case of PDSCH/PUSCH mapping type A, the DMRS is located in the third symbol (symbol #2) or the fourth symbol (symbol #3) in the slot according to RRC signaling. In the case of PDSCH/PUSCH mapping type B, a DMRS is mapped with respect to the first OFDM symbol of a PDSCH/PUSCH resource. One or two symbols from the first symbol of the PDSCH/PUSCH resource may be used as DMRS symbol(s) according to other DMRS parameters. For example, in the case of PDSCH/PUSCH mapping type B, the DMRS is located at the first symbol allocated for the PDSCH/PUSCH. In the present disclosure, the PDSCH/PUSCH mapping type may be referred to as a mapping type or a DMRS mapping type. For example, in this specification, PUSCH mapping type A may be referred to as mapping type A or DMRS mapping type A, and PUSCH mapping type B may be referred to as mapping type B or DMRS mapping type B.

The scheduling DCI includes an FDRA field that provides assignment information about RBs used for the PDSCH or the PUSCH. For example, the FDRA field provides information about a cell for PDSCH or PUSCH transmission to the UE, information about a BWP for PDSCH or PUSCH transmission, and/or information about RBs for PDSCH or PUSCH transmission.

### * Resource Allocation by RRC

As mentioned above, there are two types of transmission without dynamic grant: configured grant Type 1 and configured grant Type 2. In configured grant Type 1, a UL grant is provided by RRC and stored as a configured UL grant. In configured grant Type 2, the UL grant is provided by the PDCCH and stored or cleared as the configured UL grant based on L1 signaling indicating configured UL grant activation or deactivation. Type 1 and Type 2 may be configured by RRC per serving cell and per BWP. Multiple configurations may be active simultaneously on different serving cells.

When configured grant Type 1 is configured, the UE may be provided with the following parameters through RRC signaling:
- *cs-RNTI* corresponding to a CS-RNTI for retransmission;
- *periodicity* corresponding to a periodicity of configured grant Type 1;
- *timeDomainOffset* indicating an offset of a resource with respect to system frame number (SFN) = 0 in the time domain;
- *timeDomainAllocation* value *m* that provides a row index m+1 pointing to the allocation table, indicating a combination of the start symbol S, the length *L*, and the PUSCH mapping type;
- *frequencyDomainAllocation* that provides frequency domain resource allocation; and
- *mcsAndTBS* that provides *I*_{MCS} indicating a modulation order, a target code rate, and a transport block size.

Upon configuration of configured grant Type 1 for a serving cell by RRC, the UE stores the UL grant provided by RRC as a configured UL grant for an indicated serving cell and initializes or re-initializes the configured UL grant to start in a symbol according to *timeDomainOffset* and S (derived from *SLIV*) and to recur with *periodicity.* After the UL grant is configured for configured grant Type 1, the UE may consider that the UL grant recurs in association with each symbol satisfying: [(SFN * *numberOfSlotsPerFrame* (*numberOfSymbolsPerSlot*) + (slot number in the frame ** numberOfSymbolsPerSlot*) + symbol number in the slot] = (*timeDomainOffset * numberOfSymbolsPerSlot +* S + N ** periodicity*) modulo (1024 * *numberOfSlotsPerFrame * numberOfSymbolsPerSlot*), for all N >= 0, where *numberOfSlotsPerFrame* and *numberOfSymbolsPerSlot* indicate the number of consecutive slots per frame and the number of consecutive OFDM symbols per slot, respectively (refer to Table 1 and Table 2).

For configured grant Type 2, the UE may be provided with the following parameters by the BS through RRC signaling:
- *cs-RNTI* corresponding to a CS-RNTI for activation, deactivation, and retransmission; and
- *periodicity* that provides a periodicity of configured grant Type 2.

An actual UL grant is provided to the UE by the PDCCH (addressed to the CS-RNTI). After the UL grant is configured for configured grant Type 2, the UE may consider that the UL grant recurs in association with each symbol satisfying: [(SFN ** numberOfSlotsPerFrame * numberOfSymbolsPerSlot*) + (slot number in the frame ** numberOfSymbolsPerSlot*) + symbol number in the slot] = [(SFN_{start time} * *numberOfSlotsPerFrame * numberOfSymbolsPerSlot +* slot_{start time} ** numberOfSymbolsPerSlot +* symbol_{start time}) + N ** periodicity*] modulo (1024 * *numberOfSlotsPerFrame * numberOfSymbolsPerSlot*)*,* for all N >= 0, where SFN_{start time}, slot_{start time}, and symbol_{start time} represent an SFN, a slot, and a symbol, respectively, of the first transmission opportunity of the PUSCH after the configured grant is (re-)initialized, and *numberOfSlotsPerFrame* and *numberOfSymbolsPerSlot* indicate the number of consecutive slots per frame and the number of consecutive OFDM symbols per slot, respectively (refer to Table 1 and Table 2).

In some scenarios, a parameter *harq-ProcID-Offset* and/or a parameter *harq-ProcID-Offset2* used to derive HARQ process IDs for configured UL grants may be further provided by the BS to the UE. *harq-ProcID-Offset* is an offset of a HARQ process for a configured grant for operation with shared spectrum channel access, and *harq-ProcID-Offset2* is an offset of a HARQ process for a configured grant. In the present disclosure, *cg-RetransmissionTimer* is a duration after (re)transmission based on a configured grant in which the UE should not autonomously perform retransmission based on the HARQ process of the (re)transmission. *cg-RetransmissionTimer* may be provided to the UE by the BS when retransmission on a configured UL grant is configured. For configured grants configured with neither *harq-ProcID-Offset* nor *cg-RetransmissionTimer,* the HARQ process ID associated with the first symbol of UL transmission may be derived from the following equation: HARQ Process ID = [floor(CURRENT_symbol/periodicity)] modulo *nrofHARQ-Processes.* For configured UL grants with *harq-ProcID-Offset2,* the HARQ process ID associated with the first symbol of UL transmission may be derived from the following equation: HARQ Process ID = [floor(CURRENT_symbol / *periodicity*)] modulo *nrofHARQ-Processes + harq-ProcID-Offset2,* where CURRENT_symbol = (SFN * *numberOfSlotsPerFrame * numberOfSymbolsPerSlot +* slot number in the frame ** numberOfSymbolsPerSlot +* symbol number in the slot), and *numberOfSlotsPerFrame* and *numberOfSymbolsPerSlot* denote the number of consecutive slots per frame and the number of consecutive OFDM symbols per slot, respectively. For configured UL grants with *cg-RetransmissionTimer,* the UE may select a HARQ process ID from among HARQ process IDs available for the configured grant configuration.

On DL, the UE may be configured with semi-persistent scheduling (SPS) per serving cell and per BWP by RRC signaling from the BS. For DL SPS, DL assignment is provided to the UE by the PDCCH and stored or cleared based on L1 signaling indicating SPS activation or deactivation. When SPS is configured, the UE may be provided with the following parameters by the BS through RRC signaling:
- *cs-RNTI* corresponding to a CS-RNTI for activation, deactivation, and retransmission;
- *nrofHARQ-Processes* that provides the number of HARQ processes for SPS;
- *periodicity* that provides a periodicity of configured DL assignment for SPS;
- *n1PUCCH-AN* that provides a HARQ resource for a PUCCH for SPS (the network configures the HARQ resource as format 0 or format 1, and the actual PUCCH resource is configured by *PUCCH-Config* and referred to in *n1PUCCH-AN* by the ID thereof).

After DL assignment is configured for SPS, the UE may consider sequentially that N-th DL assignment occurs in a slot satisfying: (*numberOfSlotsPerFrame* * SFN + slot number in the frame) = [(*numberOfSlotsPerFrame* * SFN_{start time} + slot_{start time}) + N * *periodicity * numberOfSlotsPerFrame* / 10] modulo (1024 ** numberOfSlotsPerFrame*), where SFN_{start time} and slot_{start time} represent an SFN and a slot, respectively, of first transmission of the PDSCH after configured DL assignment is (re-)initialized, and *numberOfSlotsPerFrame* and *numberOfSymbolsPerSlot* indicate the number of consecutive slots per frame and the number of consecutive OFDM symbols per slot, respectively (refer to Table 1 and Table 2).

In some scenarios, a parameter *harq-ProcID-Offset* used to derive HARQ process IDs for configured DL assignments may be further provided by the BS to the UE. *harq-ProcID-Offset* is an offset of a HARQ process for SPS. For configured DL assignments without *harq-ProcID-Offset,* a HARQ process ID associated with a slot in which DL transmission starts may be determined from the following equation: HARQ Process ID = [floor (CURRENT_slot * 10 / (*numberOfSlotsPerFrame * periodicity*))] modulo *nrofHARQ-Processes,* where CURRENT_slot = [(SFN ** numberOfSlotsPerFrame*) + slot number in the frame], and *numberOfSlotsPerFrame* denotes the number of consecutive slots per frame. For configured DL assignments with *harq-ProcID-Offset,* a HARQ process ID associated with a slot in which DL transmission starts may be determined from the following equation: HARQ Process ID = [floor (CURRENT_slot / periodicity)] modulo nrofHARQ-Processes + harq-ProcID-Offset, where CURRENT_slot = [(SFN * numberOfSlotsPerFrame) + slot number in the frame], and *numberOfSlotsPerFrame* denotes the number of consecutive slots per frame.

If the CRC of a corresponding DCI format is scrambled with the CS-RNTI provided by the RRC parameter *cs-RNTI,* and a new data indicator field for an enabled transport block is set to 0, the UE validates, for scheduling activation or scheduling release, a DL SPS assignment PDCCH or a configured UL grant Type 2 PDCCH. Validation of the DCI format is achieved if all fields for the DCI format are set according to Table 7 and Table 8. Table 7 shows an example of special fields for DL SPS and UL grant Type 2 scheduling activation PDCCH validation, and Table 8 shows an example of special fields for DL SPS and UL grant Type 2 scheduling release PDCCH validation.

**Table 6**

| | DCI format 0_0/0_1 | DCI format 1_0 | DCI format 1_1 |
|---|---|---|---|
| HARQ process number | set to all '0's | set to all '0's | set to all '0's |
| Redundancy version | set to '00' | set to '00' | For the enabled transport block: set to '00' |

**Table 7**

| | DCI format 0_0 | DCI format 1_0 |
|---|---|---|
| HARQ process number | set to all '0's | set to all '0's |
| Redundancy version | set to '00' | set to '00' |
| Modulation and coding scheme | set to all '1's | set to all '1's |
| Resource block assignment | set to all '1's | set to all '1's |

Actual DL assignment and UL grant for DL SPS or UL grant Type 2, and a corresponding MCS are provided by resource assignment fields (e.g., a TDRA field providing a TDRA value m, an FDRA field providing frequency resource block assignment, and/or an MCS field) in the DCI format carried by a corresponding DL SPS or UL grant Type 2 scheduling activation PDCCH. If validation is achieved, the UE considers information in the DCI format as valid activation or valid release of DL SPS or configured UL grant Type 2.

In the present disclosure, a PDSCH based on DL SPS may be referred to as an SPS PDSCH, and a PUSCH based on a UL configured grant (CG) may be referred to as a CG PUSCH. A PDSCH dynamically scheduled by DCI carried on a PDCCH may be referred to as a dynamic grant (DG) PDSCH, and a PUSCH dynamically scheduled by DCI carried by on a PDCCH may be referred to as a DG PUSCH.

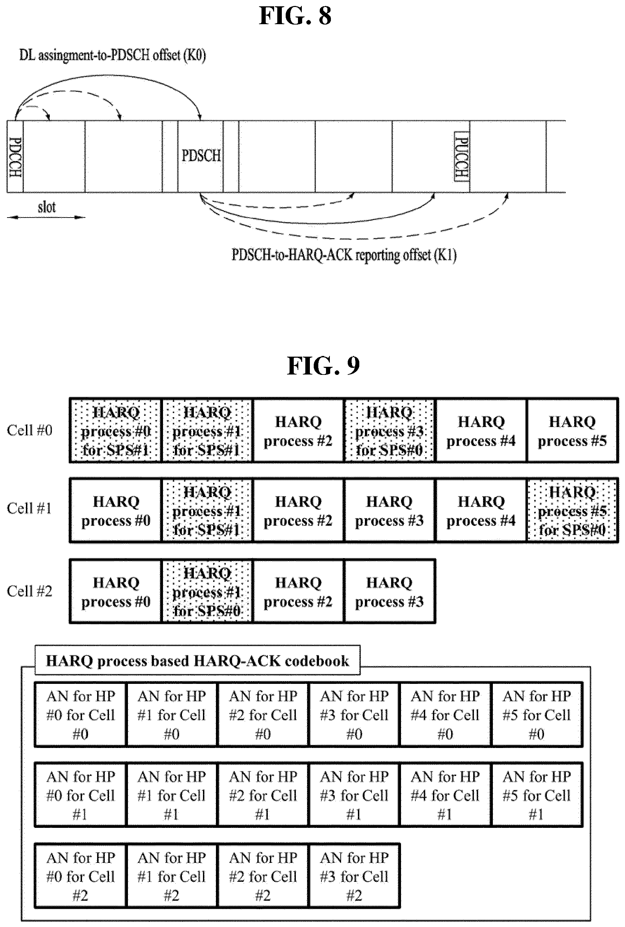

FIG. 8 illustrates a HARQ-ACK transmission/reception procedure.

Referring to FIG. 8, the UE may detect a PDCCH in a slot n. Next, the UE may receive a PDSCH in a slot n+K0 according to scheduling information received through the PDCCH in the slot n and then transmit UCI through a PUCCH in a slot n+K1. In this case, the UCI includes a HARQ-ACK response for the PDSCH. In some scenarios, PUCCH feedback based on a slot composed of 14 OFDM symbols may be performed as well as PUCCH feedback based on a subslot composed of (e.g., 2 to 7) OFDM symbols fewer than 14 OFDM symbols.

The DCI (e.g., DCI format 1_0 or DCI format 1_1) carried by the PDCCH for scheduling the PDSCH may include the following information.
- FDRA: FDRA indicates an RB set allocated to the PDSCH.
- TDRA: TDRA indicates a DL assignment-to-PDSCH slot offset K0, the start position (e.g., symbol index S) and length (e.g., the number of symbols, L) of the PDSCH in a slot, and the PDSCH mapping type. PDSCH mapping Type A or PDSCH mapping Type B may be indicated by TDRA. For PDSCH mapping Type A, the DMRS is located in the third symbol (symbol #2) or fourth symbol (symbol #3) in a slot. For PDSCH mapping Type B, the DMRS is allocated in the first symbol allocated for the PDSCH.
- PDSCH-to-HARQ_feedback timing indicator: This indicator indicates K1.

If the PDSCH is configured to transmit a maximum of one TB, a HARQ-ACK response may consist of one bit. If the PDSCH is configured to transmit a maximum of 2 TBs, the HARQ-ACK response may consist of 2 bits when spatial bundling is not configured and one bit when spatial bundling is configured. When a HARQ-ACK transmission timing for a plurality of PDSCHs is designated as slot n+K1, UCI transmitted in slot n+K1 includes a HARQ-ACK response for the plural PDSCHs.

In the present disclosure, a HARQ-ACK payload consisting of HARQ-ACK bit(s) for one or plural PDSCHs may be referred to as a HARQ-ACK codebook. The HARQ-ACK codebook may be categorized as i) a semi-static HARQ-ACK codebook, ii) a dynamic HARQ-ACK codebook and iii) HARQ process based HARQ-ACK codebook, according to a HARQ-ACK payload determination scheme.

In the case of the semi-static HARQ-ACK codebook, parameters related to a HARQ-ACK payload size that the UE is to report are semi-statically determined by a (UE-specific) higher layer (e.g., RRC) signal. The HARQ-ACK payload size of the semi-static HARQ-ACK codebook, e.g., the (maximum) HARQ-ACK payload (size) transmitted through one PUCCH in one slot, may be determined based on the number of HARQ-ACK bits corresponding to a combination (hereinafter, bundling window) of all DL carriers (i.e., DL serving cells) configured for the UE and all DL scheduling slots (or PDSCH transmission slots or PDCCH monitoring slots) for which the HARQ-ACK transmission timing may be indicated. That is, in a semi-static HARQ-ACK codebook scheme, the size of the HARQ-ACK codebook is fixed (to a maximum value) regardless of the number of actually scheduled DL data. For example, DL grant DCI (PDCCH) includes PDSCH-to-HARQ-ACK timing information, and the PDSCH-to-HARQ-ACK timing information may have one (e.g., k) of a plurality of values. For example, when the PDSCH is received in slot #m and the PDSCH-to-HARQ-ACK timing information in the DL grant DCI (PDCCH) for scheduling the PDSCH indicates k, the HARQ-ACK information for the PDSCH may be transmitted in slot #(m+k). As an example, k ∈ {1, 2, 3, 4, 5, 6, 7, 8}. When the HARQ-ACK information is transmitted in slot #n, the HARQ-ACK information may include possible maximum HARQ-ACK based on the bundling window. That is, HARQ-ACK information of slot #n may include HARQ-ACK corresponding to slot #(n-k). For example, when k ∈ {1, 2, 3, 4, 5, 6, 7, 8}, the HARQ-ACK information of slot #n may include HARQ-ACK corresponding to slot #(n-8) to slot #(n-1) regardless of actual DL data reception (i.e., HARQ-ACK of a maximum number). Here, the HARQ-ACK information may be replaced with a HARQ-ACK codebook or a HARQ-ACK payload. A slot may be understood/replaced as/with a candidate occasion for DL data reception. As described in the example, the bundling window may be determined based on the PDSCH-to-HARQ-ACK timing based on a HARQ-ACK slot, and a PDSCH-to-HARQ-ACK timing set may have predefined values (e.g., {1, 2, 3, 4, 5, 6, 7, 8}) or may be configured by higher layer (RRC) signaling. The semi-static HARQ-ACK codebook is referred to as a Type-1 HARQ-ACK codebook. For the Type-1 HARQ-ACK codebook, the number of bits to be transmitted in a HARQ-ACK report is fixed and may be potentially large. If many cells are configured but only few cells are scheduled, the Type-1 HARQ-ACK codebook may be inefficient.

In the case of the dynamic HARQ-ACK codebook, the HARQ-ACK payload size that the UE is to report may be dynamically changed by the DCI etc. The dynamic HARQ-ACK codebook is referred to as a Type-2 HARQ-ACK codebook. The Type-2 HARQ-ACK codebook may be considered as optimized HARQ-ACK feedback because the UE sends feedback only for scheduled serving cells. However, in poor channel conditions, the UE may erroneously determine the number of scheduled serving cells. To solve this problem, a downlink assignment index (DAI) may be included as a part of DCI. For example, in the dynamic HARQ-ACK codebook scheme, DL scheduling DCI may include a counter-DAI (i.e., c-DAI) and/or a total-DAI (i.e., t-DAI). Here, the DAI indicates a downlink assignment index and is used for the BS to inform the UE of transmitted or scheduled PDSCH(s) for which HARQ-ACK(s) are to be included in one HARQ-ACK transmission. Particularly, the c-DAI is an index indicating order between PDCCHs carrying DL scheduling DCI (hereinafter, DL scheduling PDCCHs), and t-DAI is an index indicating the total number of DL scheduling PDCCHs up to a current slot in which a PDCCH with the t-DAI is present.

In the case of a HARQ-ACK codebook based on HARQ processes, the HARQ-ACK payload is determined based on all HARQ processes of all configured (or activated) serving cells in a PUCCH group. For example, the size of the HARQ-ACK payload to be reported by the UE using the HARQ-ACK codebook based on HARQ processes may be determined based on the number of all configured or activated serving cells in the PUCCH group configured for the UE and the number of HARQ processes for the serving cells. The HARQ-ACK codebook based on HARQ processes is also referred to as a Type-3 HARQ-ACK codebook. The type-3 HARQ-ACK codebook may be applied to one-shot feedback.

If the UE is provided with *pdsch-HARQ-ACK-CodebookList* through RRC signaling, the UE may be indicated by *pdsch-HARQ-ACK-CodebookList* to generate one or multiple HARQ-ACK codebooks. When the UE is indicated to generate one HARQ-ACK codebook, the HARQ-ACK codebook is associated with a PUCCH of priority index 0. When the UE is provided with *pdsch-HARQ-ACK-CodebookList,* the UE multiplexes only HARQ-ACK information associated with the same priority index with the same HARQ-ACK codebook. When the UE is indicated to generate two HARQ-ACK codebooks, the first HARQ-ACK codebook is associated with a PUCCH of priority index 0, and the second HARQ-ACK codebook is associated with a PUCCH of priority index 1.

For example, when the UE is provided with *pdsch-HARQ-ACK-OneShotFeedback* through RRC signaling and the UE detects, in any PDCCH monitoring period, a DCI format that includes a one-time HARQ-ACK request field having a value equal to 1, the UE includes the HARQ-ACK information in the type-3 HARQ-ACK codebook. For example, in some implementations, the UE may determine the HARQ-ACK information bits ${{o}^{˜}}_{0}^{ACK} , {{o}^{˜}}_{1}^{ACK} , … , {{o}^{˜}}_{{O}_{ACK} - 1}^{ACK}$ for a total of O_{ACK} HARQ-ACK information bits in the type-3 HARQ-ACK codebook according to the following procedure.
> Set N^{DL}_{cells} to the number of configured serving cells.
> If the value of *nrofHARQ-ProcessesForPDSCH* for serving cell c is provided, set N^{DL}_{HARQ,c} to the value; else, set N^{DL}_{HARQ,c} =8. Here, *nrofHARQ-ProcessesForPDSCH* is the number of HARQ processes to be used for PDSCH for serving cell c, which may be provided to the UE through RRC signaling.
> If *harq-ACK-SpatialBundlingPUCCH* is provided and NDI_{HARQ} = 0, or if *harq-ACK-SpatialBundlingPUCCH* is not provided, or if *maxCodeBlockGroupsPerTransportBlock* is provided for serving cell c, set N^{DL}_{TB,c} to the value of *maxNrofCodeWordsScheduledByDCI* for serving cell c; else set N^{DL}_{TB,c} = 1, where: *harq-ACK-SpatialBundlingPUCCH* is an RRC parameter enabling spatial bundling of HARQ ACKs; *maxCodeBlockGroupsPerTransportBlock* is an RRC parameter that is used to set the maximum number of code block groups (CBGs) per transport block (TB) and may be set for one serving cell; and *maxNrofCodeWordsScheduledByDCI* is an RRC parameter that sets the maximum number of code words that may be scheduled by DCI. NDI_{HARQ} is a new data indicator value for the HARQ process.
> If *maxCodeBlockGroupsPerTransportBlock* is provided for serving cell c and *pdsch-HARQ-ACK-OneShotFeedbackCBG* is provided, set N^{CBG/TB,max}_{HARQ-ACK,c} to the number of HARQ-ACK information bits per TB for PDSCH receptions on serving cell c; else set N^{CBG/TB,max}_{HARQ-ACK,c} = 0, where *maxCodeBlockGroupsPerTransportBlock* is an RRC parameter used to set the maximum number of code block groups (CBGs) per TB. *pdsch-HARQ-ACK-OneShotFeedbackCBG* is an RRC parameter. If *pdsch-HARQ-ACK-OneShotFeedbackCBG* is configured, for each component carrier (CC) with a coding block group (CBG) level transmission that has DCI format 1_1 configured, a request may be made to the UE for inclusion of CBG level HARQ. If not configured, the UE shall report a TB level HARQ-ACK even if the CBG level transmission is configured for the CC.
> If *pdsch-HARQ-ACK-OneShotFeedbackNDI*I is provided, set NDI_{HARQ} = 0; else set NDI_{HARQ} = 1, where if *pdsch-HARQ-ACK-OneShotFeedbackNDI* is configured, DCI format 1_1 may request the UE to include NDI for each reported HARQ-ACK.

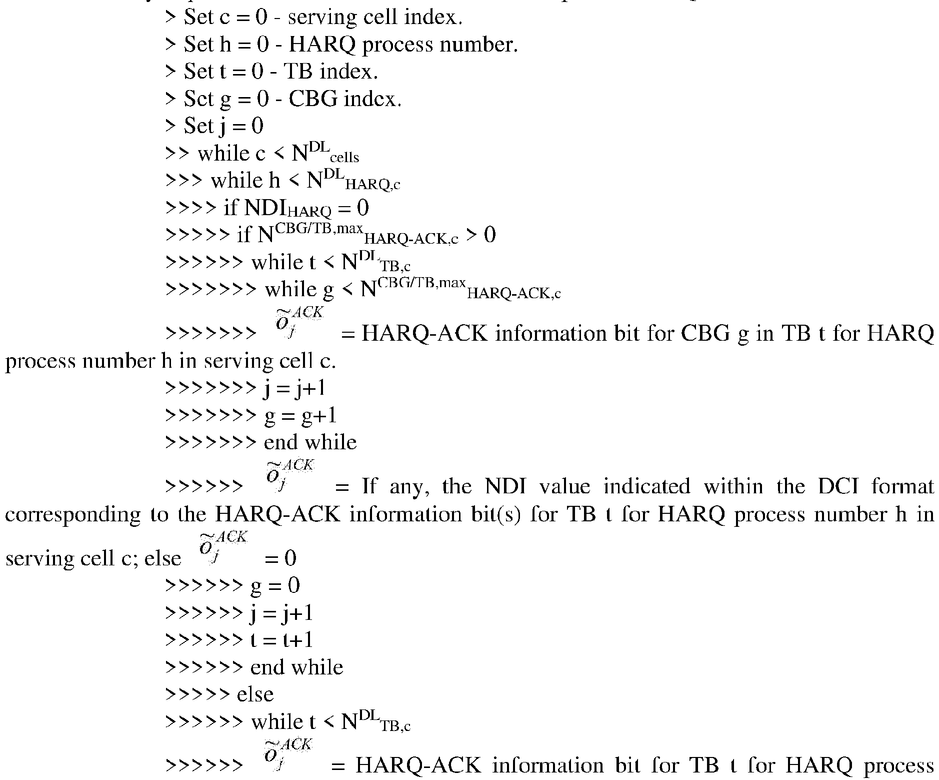

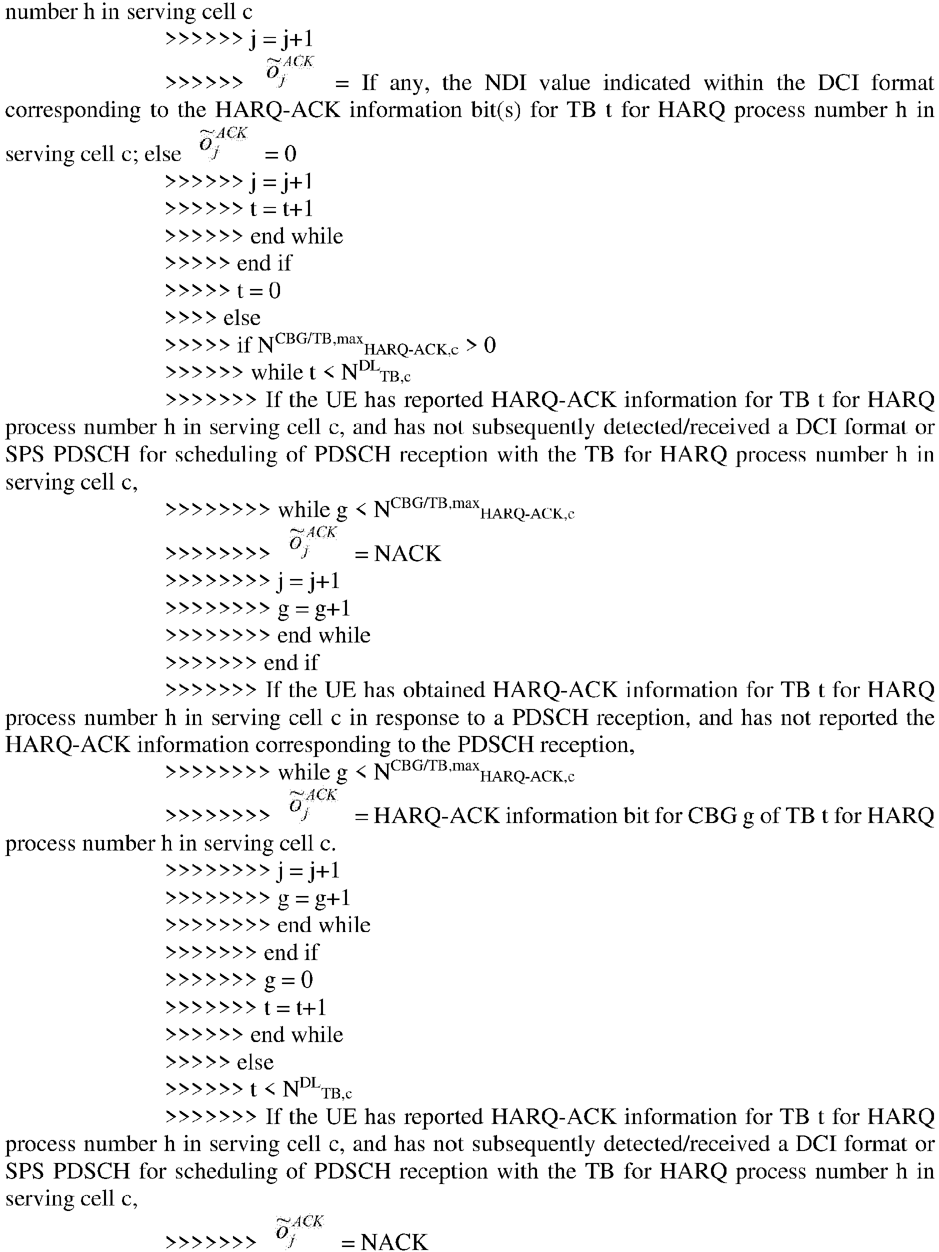

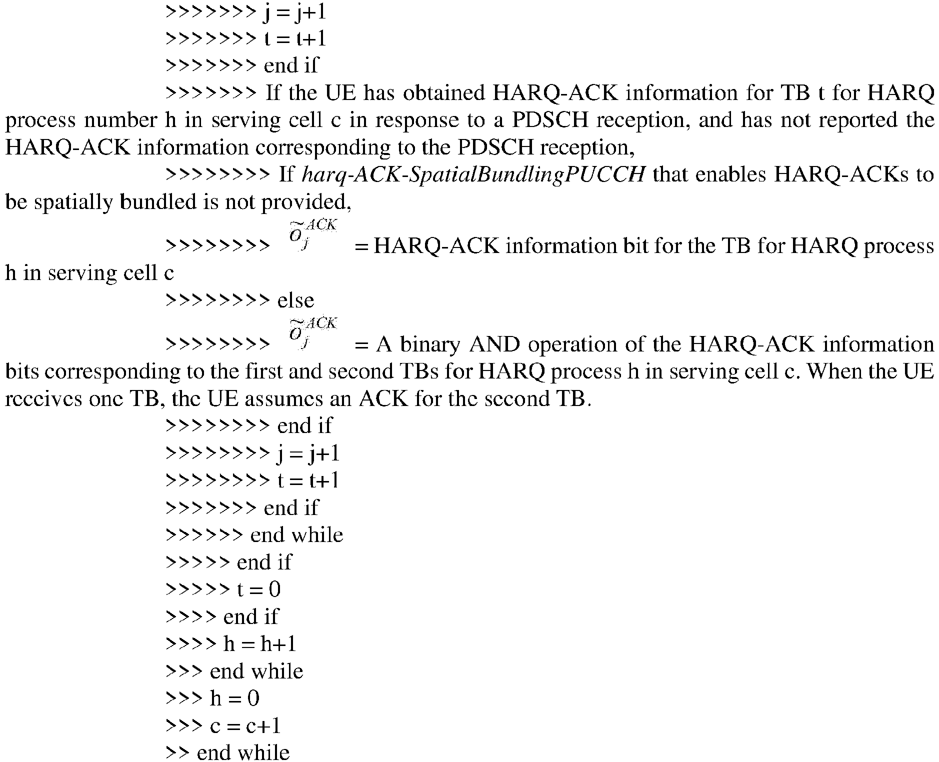

According to this procedure, one Type-3 HARQ-ACK codebook is generated to contain the HARQ-ACK information bits for all HARQ processes for each of the serving cells. In some scenarios, for downlink, up to 16 HARQ processes per cell may be supported by the UE, or up to 32 HARQ processes per cell may be supported by the UE for subcarrier spacing configurations u=5 and u=6, depending on the UE capability. The number of HARQ processes that the UE may assume for the downlink may be set for the UE for each cell by the upper layer parameter *nrofHARQ-ProcessesForPDSCH.* When no configuration is provided, the UE may assume 8 HARQ processes.

FIG. 9 illustrates an example of a HARQ process-based HARQ-ACK codebook according to some implementations of the present disclosure. In FIG. 9, "AN" refers to HARQ-ACK information and "HP" refers to a HARQ process.

Referring to FIG. 9, the number of HARQ processes for Cell #0 is 6, the number of HARQ processes for Cell #1 is 6, and the number of HARQ processes for Cell #2 is 4, Based on the procedure described above, the HARQ-ACK codebook is generated to contain HARQ-ACK information for each of the 8 HARQ processes for Cell #0, the 8 HARQ processes for Cell #1, and the 4 HARQ processes for Cell #2, regardless of whether the HARQ processes are associated with dynamic PDSCH or SPS PDSCH.

However, in 3GPP-based wireless communication systems, uplink or downlink scheduling may be performed dynamically or semi-statically. In NR-based wireless communication systems among 3GPP-based wireless communication systems, the BS may configure or indicate the transmission direction of each symbol (e.g., downlink symbol, uplink symbol, flexible symbol) for the UE semi-statically using a *tdd-UL-DL-ConfigurationCommon* or *tdd-UL-DL-ConfigurationDedicated* message, or dynamically using DCI format 2_0. Since dynamically scheduled PDSCH (hereinafter referred to as dynamic PDSCH) is scheduled by the BS as needed at the corresponding time, the transmission of HARQ-ACK for dynamic PDSCH or the above PDSCH is unlikely to be canceled by *tdd-UL-DL-ConfigurationCommon, tdd-UL-DL-ConfigurationDedicated,* or DCI format 2_0. However, since a semi-persistent scheduling based PDSCH (hereinafter referred to as SPS PDSCH) or a semi-persistent scheduling based PUSCH (hereinafter referred to as CG PUSCH) is semi-persistently pre-allocated resources, the SPS PDSCH, or HARQ-ACK for the SPS PDSCH, or CG PUSCH may be canceled by *tdd-UL-DL-ConfigurationCommon, tdd-UL-DL-ConfigurationDedicated,* or DCI format 2_0. If transmission of the HARQ-ACK for SPS PDSCH (hereinafter, SPS HARQ-ACK) is canceled by the TDD operation, the BS may not know the result of the PDSCH transmission, which may result in retransmission scheduling even for PDSCHs that were successfully transmitted and unnecessary waste of downlink resources. If HARQ-ACK information for all HARQ processes for the serving cells is included in the HARQ process-based HARQ-ACK codebook in the manner described with reference to FIG. 9, HARQ-ACK information for SPS PDSCHs may also be provided to the BS, but the size of the HARQ-ACK codebook may increase unnecessarily.

Hereinafter, some implementations of the present disclosure are described in which the UE transmits a HARQ-ACK codebook configured as a HARQ-ACK response to SPS PDSCHs through an explicit HARQ-ACK transmission indication from the BS, considering a case where some PUCCH transmissions in SPS are not transmitted by TDD operation. Described below are some implementations of the present disclosure in which the UE configures a HARQ process-based HARQ-ACK codebook for transmitting a HARQ-ACK response to the reception of an SPS PDSCH, and some implementations of the present disclosure related to signaling by the BS to instruct the UE to transmit a HARQ-ACK codebook. The HARQ process-based HARQ-ACK codebook according to some implementations of the present disclosure may be used when, for example, the SPS HARQ-ACK transmission by the UE is canceled.

### UE perspective:

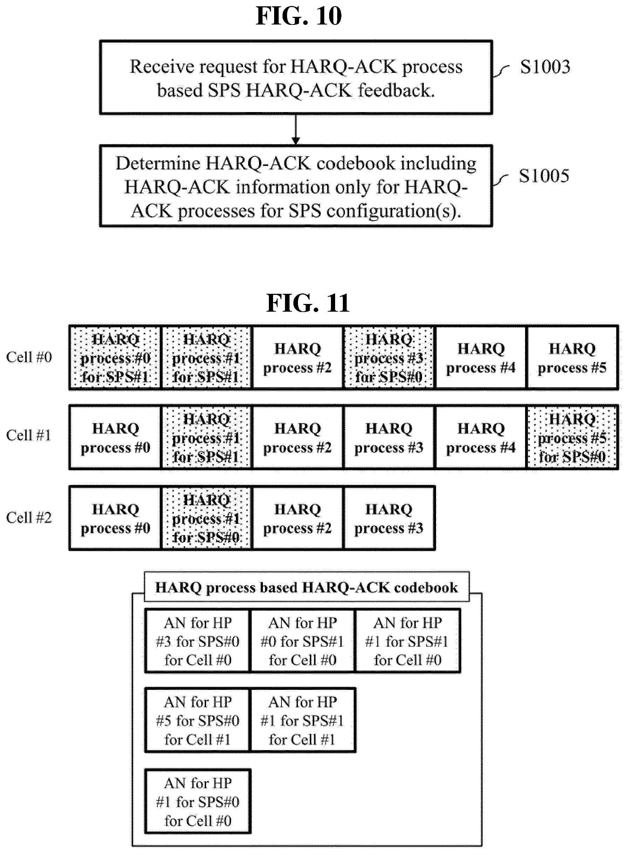

FIG. 10 illustrates an example of the flow of UE operations according to some implementations of the present disclosure.

The UE may receive from the BS a TDD configuration (e.g., *tdd-UL-DL-ConfigurationCommon, tdd-UL-DL-ConfigurationDedicated*) and an SPS configuration(s) for the SPS radio resource. The UE may perform SPS PDSCH reception on the downlink radio resource based on the SPS configuration(s). The UE may receive a request for HARQ-ACK process based SPS HARQ-ACK feedback (S1003). The UE may generate a HARQ-ACK codebook containing only HARQ-ACK information for HARQ-ACK processes for the SPS configuration(s) (S1005).

In some implementations, the UE may preferentially defer HARQ-ACK transmission in response to reception of an SPS PDSCH, based on a configuration by the BS. Alternatively, in some implementations, the UE may not perform PUCCH transmission after receiving the SPS PDSCH only if the related PUCCH resource X includes a downlink radio resource. The BS may send an indication of transmission of the HARQ-ACK codebook to the UE through a DCI transmission on the PDCCH when the PUCCH transmission from the UE is deferred or cannot be carried by the downlink radio resource. In some implementations of the present disclosure, the UE that has received the indication of transmission of the HARQ-ACK codebook through the DCI may form/generate a HARQ-ACK codebook based on the HARQ process ID included in the SPS configuration and the SPS PDSCH, provided that the CRC of the DCI is scrambled with CS-RNTI.

In implementations of the present disclosure, the following UE operations may be considered.

### <Implementation A1> HARQ process based HARQ-ACK codebook for SPS PDSCH

The UE may form the HARQ-ACK codebook for the SPS PDSCH(s) according to the instruction from the BS as follows.
> A HARQ-ACK codebook (i.e., the HARQ-ACK information bit(s) to be included in the HARQ-ACK codebook) is formed for each cell for which SPS configuration is provided. In other words, the HARQ-ACK information bits to be included in the HARQ process based HARQ-ACK codebook are determined for each cell for which SPS configuration is provided. In some implementations of the present disclosure, the HARQ processes of all cells for which SPS configuration is provided may be considered in the formation of the HARQ-ACK codebook. Alternatively, in some implementations of the present disclosure, only the HARQ processes for the enabled cells among the cells for which SPS configuration is provided may be considered in the formation of the HARQ-ACK codebook.
> For each cell, a HARQ-ACK codebook (i.e., the HARQ-ACK information bit(s) to be included in the HARQ-ACK codebook) is formed using at least one of the following methods:

### >> Method 1-1:

FIG. 11 illustrates another example of a HARQ process-based HARQ-ACK codebook according to some implementations of the present disclosure. In FIG. 11, "AN" refers to HARQ-ACK information.
>>> Referring to FIG. 11, a HARQ-ACK codebook (i.e., the HARQ-ACK information bit(s) to be included in the HARQ-ACK codebook) is formed for each index of the SPS configuration provided for each cell.
>>> Referring to FIG. 11, for each index of the SPS configuration, a HARQ-ACK codebook (i.e., the HARQ-ACK information bit(s) to be included in the HARQ-ACK codebook) is formed for each HARQ process ID configured by the SPS configuration.
>>> In some implementations related to Method 1-1, only the enabled SPS configuration(s) may be considered in determining/forming the HARQ-ACK codebook. In this case, the size of the HARQ-ACK codebook may be minimized, and the reliability of the HARQ-ACK codebook may be increased.
>>> Alternatively, in some implementations related to Method 1-1, the HARQ process(es) of the entire SPS configuration(s), including the disabled SPS configuration(s), may be considered when the HARQ-ACK codebook is determined/formed. In this case, ambiguities related to the size of the HARQ-ACK codebook that may arise due to missing DCI may be eliminated, and the burden on blind decoding, in which the BS attempts to detect the HARQ-ACK codebook while changing the HARQ-ACK codebook size, may be reduced.

### >> Method 1-2:

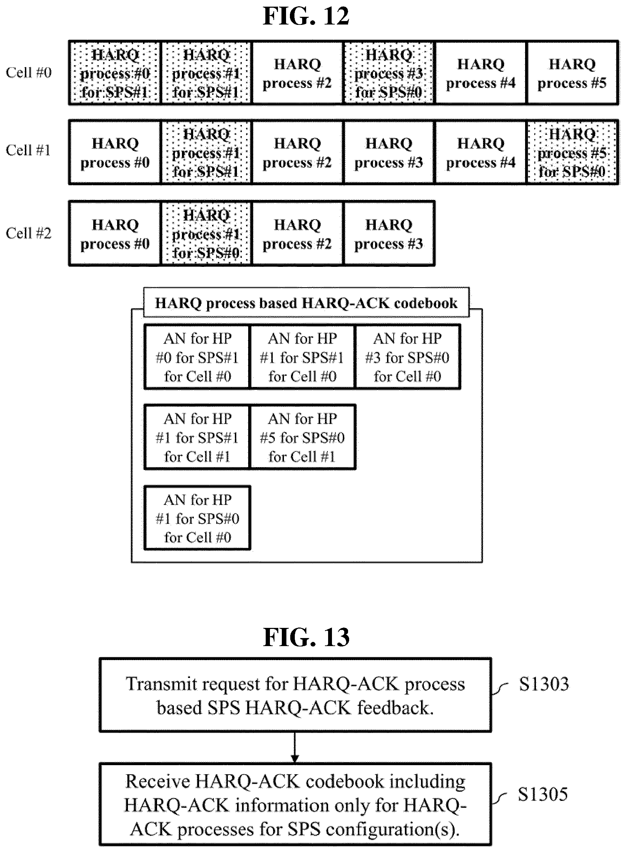

FIG. 12 illustrates another example of a HARQ process-based HARQ-ACK codebook according to some implementations of the present disclosure. In FIG. 12, "AN" refers to HARQ-ACK information, and "HP" refers to a HARQ process.
>>> Referring to FIG. 12, a HARQ-ACK codebook (i.e., the HARQ-ACK information bit(s) to be included in the HARQ-ACK codebook) is formed for each HARQ process ID configured in the SPS configuration(s) provided for each cell.
>>> In some implementations related to Method 1-2, only the enabled SPS configuration(s) may be considered in determining/forming the HARQ-ACK codebook. In this case, the size of the HARQ-ACK codebook may be minimized and the reliability of the HARQ-ACK codebook may be increased.
>>> Alternatively, in some implementations related to Method 1-2, the HARQ process(es) of the entire SPS configuration(s), including the disabled SPS configuration(s), may be considered when the HARQ-ACK codebook is determined/formed. In this case, ambiguities related to the size of the HARQ-ACK codebook that may arise due to missing DCI may be eliminated, and the burden on blind decoding, in which the BS attempts to detect the HARQ-ACK codebook while changing the HARQ-ACK codebook size, may be reduced. In these implementations, it may be assumed that there is no overlap between SPS PDSCHs.

### >> Method 1-3:

A HARQ-ACK codebook (i.e., the HARQ-ACK information bit(s) to be included in the HARQ-ACK codebook) is formed for each DL HARQ process ID configured for each cell (see FIG. 9).

### >> Methods 1-4:

>>> For each cell, a HARQ-ACK codebook (i.e., the HARQ-ACK information bit(s) to be included in the HARQ-ACK codebook) is formed for each index of the SPS configuration provided for each cell.
>>> For each index of the SPS configuration, a HARQ-ACK codebook (i.e., the HARQ-ACK information bit(s) to be included in the HARQ-ACK codebook) is formed for each SPS PDSCH period in which reception is configured to start or end for a certain time. The certain time may be X symbols/subslots/slots preceding the last symbol in which the UE received the indication of transmission of the HARQ-ACK codebook. When the difference between the time T preceding the last symbol and the last symbol 1 is defined as the certain time, the duration of the certain time may be X symbols, X subslots, or X slots. The value of X may be a predetermined value, or a value set by higher layer signaling from the BS, or a value included in the indication of transmission of the HARQ-ACK codebook from the BS, or a value determined by the capability signaling pre-reported by the UE and the least of the DL/UL subcarrier spacings in use.
>>> In some implementations related to Method 1-4, only the enabled SPS configuration(s) may be considered in determining/forming the HARQ-ACK codebook. In this case, the size of the HARQ-ACK codebook may be minimized and the reliability of the HARQ-ACK codebook may be increased.
>>> Alternatively, in some implementations related to Method 1-4, the HARQ process(es) of the entire SPS configuration(s), including the disabled SPS configuration(s), may be considered when the HARQ-ACK codebook is determined/formed. In this case, ambiguities related to the size of the HARQ-ACK codebook that may arise due to missing DCI may be eliminated, and the burden on blind decoding, in which the BS attempts to detect the HARQ-ACK codebook while changing the HARQ-ACK codebook size, may be reduced.

### >> Method 1-5:

>>> For each cell, a group(s) of SPS configurations provided for each cell may be configured. Each SPS configuration may be assigned a group index, and SPS configuration(s) with the same group index may be considered as the same group. Alternatively, for each group, RRC parameters including multiple SPS configuration indexes may be provided to indicate member SPS configurations in the group. In some implementations, DCI indicating transmission of a HARQ-ACK codebook for the SPS PDSCH may indicate a group of SPS configurations as well.
>> A HARQ-ACK codebook (i.e., the HARQ-ACK information bit(s) to be included in the HARQ-ACK codebook) may be formed for the respective indexes of the SPS configurations in the indicated group.
>>> For the index of each SPS configuration, a HARQ-ACK codebook (i.e., the HARQ-ACK information bit(s) to be included in the HARQ-ACK codebook) may be formed for each HARQ process ID configured by the corresponding SPS configuration.
>>> In some implementations related to Method 1-2, only the enabled SPS configuration(s) may be considered in determining/forming the HARQ-ACK codebook. In this case, the size of the HARQ-ACK codebook may be minimized and the reliability of the HARQ-ACK codebook may be increased.
>>> Alternatively, in some implementations related to Method 1-1, the HARQ process(es) of the entire SPS configuration(s), including the disabled SPS configuration(s), may be considered when the HARQ-ACK codebook is determined/formed. In this case, ambiguities related to the size of the HARQ-ACK codebook that may arise due to missing DCI may be eliminated, and the burden on blind decoding, in which the BS attempts to detect the HARQ-ACK codebook while changing the HARQ-ACK codebook size, may be reduced. In these implementations, it may be assumed that there is no overlap between SPS PDSCHs.
> For each HARQ process ID (or each SPS PDSCH time), the following information may be included in the HARQ process-based HARQ-ACK codebook.
>> For each TB that is being received through each HARQ process ID (or received through each SPS PDSCH period) (e.g., TBs that have been received but have not yet completed a successful reception due to unsuccessful decoding, or TBs that require retransmission):
   >>> HARQ-ACK information bits indicating the (last) decoding result of a TB that is being received by the corresponding HARQ process (or received through the corresponding SPS PDSCH period) (e.g., a TB that has been received but has not yet completed a successful reception due to unsuccessful decoding, or a TB that requires retransmission).
   >>>> The length of the HARQ-ACK information bit for one TB may be determined by the set maximum number of CBGs. This is intended to allow the UE to transmit HARQ-ACK information on a per CBG basis, while ensuring that the total HARQ-ACK codebook length does not vary depending on the number of CBGs for the scheduled PDSCH.
   >>>> In this case, the decoding result of the TB may only mean the result of the TB whose reception has been initiated by an SPS PDSCH (i.e., the TB whose initial resource used for reception of the TB is an SPS PDSCH resource). When a TB that is being received in the corresponding HARQ process (e.g., a TB that has been received but has not yet completed a successful reception due to unsuccessful decoding, or a TB that requires retransmission) is indicated through DCI in which CRC is scrambled with C-RNTI or MCS-C-RNTI, the HARQ-ACK information bits may indicate the decoding result of the TB first transmitted on the SPS PDSCH in the corresponding HARQ process prior to the indication of the HARQ-ACK transmission, or may contain non-significant information or values as a simple placeholder to keep the length of the HARQ-ACK codebook constant.
   >>> Value of a new data indicator (NDI) of a TB that is being received by the corresponding HARQ process (or received through the corresponding SPS PDSCH period) (e.g., a TB that has been received but has not yet completed a successful reception due to unsuccessful decoding, or a TB that requires retransmission).
   >>>> In some implementations, the value of the NDI may not be included in the HARQ process-based HARQ-ACK codebook, depending on a parameter (e.g., *pdsch-HARQ-ACK-OneShotFeedbackNDI-r16*) configured by higher layer signaling of the BS.
   >>>> Alternatively, in some implementations, if the HARQ-ACK codebook is generated based on SPS PDSCH only, the NDI value may be omitted. For example, if Methods 1-4 are used, or if Methods 1-1 or Method 1-2 are used and only HARQ-ACK information is reported for TBs initiated by SPS PDSCH, the NDI value may be omitted.
   >>>> In the case where the HARQ-ACK codebook is generated based on SPS PDSCH only, the value of the NDI may indicate multiple SPS configurations containing the corresponding HARQ process in ascending order of the indexes thereof. When the number of the SPS configurations containing the HARQ process is N, the value of the NDI may be expressed in ceil{log₂(N)) bit(s). Alternatively, when the value of the NDI is in M bit(s), the number of the SPS configurations containing the HARQ process may be limited to 2^{M}.
   >>>> In the case where the HARQ-ACK codebook is generated based on all DL HARQ process(es) in the cell, the value of the NDI may be determined as follows.
   >>>>> The value of the NDI field indicated in the DCI that indicates a TB that is being received (e.g., a TB that has been received but has not yet completed a successful reception due to unsuccessful decoding, or a TB that requires retransmission). This may be limited to the case where the CRC of the DCI is scrambled to a C-RNTI.
   >>>>> A specific value (e.g., 1) may always be used in the case where a TB being received (e.g., a TB that has been received but has not yet completed a successful reception due to unsuccessful decoding, or a TB that requires retransmission) has been initiated by an SPS PDSCH, or a TB has been scheduled by the DCI in which CRC is scrambled with a CS-RNTI.
   >>>>> Alternatively, the value of the NDI may be extended to 2 bits to differentiate SPS PDSCHs and PDSCHs dynamically indicated by CS-RNTI from PDSCHs indicated by C-RNTI and MCS-C-RNTI. For the NDI extended to 2 bits, in the case where a TB that is being received (e.g., a TB that has been received but has not yet completed a successful reception due to unsuccessful decoding, or a TB that requires retransmission) is indicated by DCI in which CRC is scrambled with the C-RNTI or MCS-C-RNTI, the value of the NDI field in the DCI may be indicated by the least significant bit (LSB). In the case where a TB being received (e.g., a TB that has been received but has not yet completed a successful reception due to unsuccessful decoding, or a TB that requires retransmission) has been initiated by an SPS PDSCH, the most significant bit (MSB) may indicate 0 as the value of the NDI for an initial transmission and 1 as the value of the NDI for a retransmission with CS-RNTI.
   >>> In the case where the HARQ-ACK codebook is generated based on SPS PDSCH only, the number of TBs and CBGs transmitted in each HARQ process may always be assumed to be 1. In other words, only the 1-bit HARQ-ACK information bit and one NDI may always be reported for the HARQ process associated with the SPS PDSCH, regardless of whether the scheduling of CBGs or multiple codewords is supported.

### <Implementation A2> How to trigger HARQ process based HARQ-ACK codebook for SPS PDSCH)

The BS may make a request to the UE to transmit a HARQ-ACK codebook for SPS PDSCH, and the UE may receive the request and transmit to the BS a HARQ-ACK codebook formed according to implementation A1/implementation B1 or a Type 1/Type-2/Type-3 HARQ-ACK codebook.

The BS may configure a separate DCI field to indicate the transmission of the HARQ process based HARQ-ACK codebook for the SPS PDSCH. Alternatively, the BS may indicate the transmission of the HARQ-ACK codebook for the SPS PDSCH using the "One-shot HARQ-ACK request field" used in the indication of the Type-3 HARQ-ACK codebook. In this case, the following methods may be used to distinguish the codebook from the DCI indicating the Type-3 HARQ-ACK codebook.
> Method 2-1: The HARQ process based HARQ-ACK codebook for the SPS PDSCH may be distinguished by the RNTI used to scramble the CRC of the DCI indicating the transmission of the HARQ-ACK codebook. For example, when the CS-RNTI is used, a HARQ-ACK codebook formed/generated by implementation A1/implementation B1 or a Type-3 HARQ-ACK codebook considering only the HARQ process(es) included in the SPS configuration(s) may be transmitted. When the C-RNTI or MCS-C-RNTI is used, a Type-3 HARQ-ACK codebook generated regardless of the type of scheduling may be transmitted. When the CS-RNTI is used, in some implementations, the value of the NDI may be indicated as 1 to distinguish from SPS enable/disable. When the CS-RNTI is used, in some implementations, the value of the HARQ process number may be indicated with all bits set to 1 to distinguish from SPS enable/disable. When the CS-RNTI is used, in some implementations, the value of the redundancy version (RV) may be indicated with all bits set to 1 or may be indicated as "01" or "1" to distinguish from the SPS enable/disable. By indicating an RV index of 3 or 1, which is generally not used for initial transmissions, the possibility of misrecognizing the DCI triggering the HARQ process-based HARQ-ACK codebook for SPS PDSCH as normal scheduling may be reduced.
> Method 2-2: Through higher layer signaling from the BS, it can be configured whether the "One-shot HARQ-ACK request field" is to indicate the transmission of the HARQ-ACK codebook generated/formed considering only the SPS PDSCH, or the transmission of the HARQ-ACK codebook for all HARQ process(es).
> Method 2-3: The "One-shot HARQ-ACK request field" may be extended or an additional 1-bit long field may be formed in the DCI. For example, if a 2-bit "One-shot HARQ-ACK request field" is configured and the value of the field is "10", a HARQ-ACK codebook configured through implementation A1/implementation B1 or a Type-3 HARQ-ACK codebook considering only the HARQ process(es) included in the SPS configuration may be transmitted. If the value of the field is "01", a Type-3 HARQ-ACK codebook considering all HARQ processes may be transmitted. Alternatively, in some implementations, the indication of the HARQ-ACK codebook transmission for the SPS PDSCH may only support HARQ-ACK codebook transmission without PDSCH scheduling, and the UE may only multiplex the HARQ-ACK codebook into PUCCH or PUSCH in the slot or subslot determined by the indication of the HARQ-ACK codebook transmission. To distinguish the indication from the DCI indicating a Type-3 HARQ-ACK codebook, a HARQ-ACK codebook transmission indication matching at least one of the followings may be considered.
>> DCI containing the "One-shot HARQ-ACK request field" set to 1.
>> DCI in which the CRC is scrambled with CS-RNTI
>> DCI with a frequency domain resource assignment field set to the following values according to the configured parameter *resourceAllocation:*
   >>> When *resourceAllocation = resourceAllocationType*0*,* all bits of the frequency domain resource assignment field in the DCI format are equal to 0; or
   >>> When *resourceAllocation = resourceAllocationType*1*,* all bits of the frequency domain resource assignment field in the DCI format are equal to 1; or
   >>> When *resourceAllocation = dynamicSwitch,* all bits of the frequency domain resource assignment field in the DCI format are equal to 0 or 1.
>> DCI in which all bits of the HARQ process number field are indicated as 1.
>> DCI in which the value of the NDI field for the enabled TB is indicated as 0 or 1. For example, i) the value of the NDI may be indicated as 1 and all bits of the HARQ process number field may be indicated as 1 to distinguish from SPS enable/disable, or ii) the value of the NDI may be indicated as 0 and the value of the frequency domain resource assignment field may be indicated as an invalid value to distinguish from SPS PDSCH retransmission.
>> DCI in which all values of the MCS field are indicated as 0 or 1. For example, when the value of the NDI is 1, all values of the MCS field may be indicated as 0 to distinguish from SPS disabling. In another example, all values of the MCS field may be indicated as 1 to distinguish from SPS enabling or retransmission scheduling.
>> DCI in which all bits of the redundancy version field are indicated as 1, or indicated as "01" or "1". For example, when the NDI is equal to 1, all bits of the redundancy version value may be indicated as 1, or indicated as "01" or "1" to distinguish from SPS enable/disable.

### <Implementation A3> PDSCH scheduling with HARQ-ACK codebook for SPS PDSCH)

In applying implementation A2/implementation B2, when the BS indicates that a HARQ-ACK codebook for SPS PDSCHs (hereinafter referred to as SPS PDSCH HARQ-ACK codebook) is to be transmitted along with the PDSCH scheduling, the UE multiplexes the HARQ-ACK feedback for the scheduled PDSCH and the indicated SPS PDSCH HARQ-ACK codebook using the following methods.
> Method 3-1: The UE concatenates the HARQ-ACK response to one scheduled PDSCH with the indicated HARQ-ACK codebook and transmit the same. For example, the UE may transmit a HARQ-ACK response to one DG PDSCH and a HARQ-ACK response to multiple HARQ processes related to an SPS PDSCH in a multiplexed manner.
> Method 3-2: The UE may concatenate the HARQ-ACK codebook transmitted in performing dynamic scheduling with the SPS PDSCH HARQ-ACK codebook indicated according to implementation A2/implementation B2 and transmit the codebooks. For example, the UE may transmit a Type-1/Type-2 HARQ-ACK codebook for a dynamically scheduled PDSCH and a HARQ-ACK response to multiple HARQ processes related to the SPS PDSCH(s) in a multiplexed manner.

### <Implementation A4> HARQ-ACK codebook for SPS PDSCH with priority indication

In applying implementation A1/implementation B1 and/or implementation A2/implementation B2, when the transmission of a HARQ-ACK codebook for an SPS PDSCH is indicated through L1 signaling (e.g., PDCCH) and a priority (e.g., priority index) is configured in each SPS configuration, the UE and BS may generate and trigger the HARQ-ACK codebook for the (SPS) PDSCH with the configured priority as follows.
> When the UE receives, through L1 signaling containing a priority indicator, the indication to transmit the HARQ-ACK codebook for the SPS PDSCH, the UE may only consider, in the generation of the HARQ-ACK codebook in implementation A1/implementation B1, the SPS configuration(s) with the priority indicated by the priority indicator contained in the L1 signaling. For example, the UE may generate a HARQ-ACK codebook of SPS configuration(s) with a specific priority based on the priority indicator contained in the DCI that has triggered the transmission of the HARQ-ACK codebook. For the reception of a normal PDSCH, the priority of the associated HARQ-ACK transmission is dynamically determined by the priority indicator contained in the scheduling message. On the other hand, for the SPS PDSCH, the priority of the HARQ-ACK for the PDSCH received through the corresponding SPS configuration is semi-persistently determined based on the priority indicator parameter contained in the associated SPS configuration through higher layer signaling of the BS. When the BS has established each of the SPS configurations for the UE to use different HARQ process(es), the priority of one HARQ process may also be determined semi-persistently in terms of SPS PDSCH reception. Therefore, implementation A4/B4 allows the overall length of the HARQ-ACK codebook to be reduced by considering only HARQ processes with a specific priority, while determining the size of the HARQ-ACK codebook semi-persistently, without any ambiguity related to the size of the HARQ-ACK codebook that may arise due to missing DCI.
> To receive from the UE a HARQ-ACK codebook of SPS configuration(s) with a specific priority, the BS may indicate to the UE that the transmission of the HARQ-ACK codebook for the SPS PDSCH is to be performed, by L1 signaling with a priority indicator indicating the priority.
> In the case where the transmission of the HARQ-ACK codebook is indicated by L1 signaling with the priority indicator, the transmission of the HARQ-ACK codebook may be treated as a transmission with the same priority as the priority indicated by the priority indicator. For example, in the case where the transmission of the HARQ-ACK codebook is indicated by L1 signaling that indicates a high priority: if the transmission of the HARQ-ACK codebook overlaps (in time) with a low priority UL transmission, the transmission of the HARQ-ACK codebook may be prioritized over the low priority UL transmission, and thus the low priority UL transmission may be canceled; if the transmission of the HARQ-ACK codebook overlaps (in time) with another high priority UL transmission, the transmission of the HARQ-ACK codebook may be multiplexed with the other high priority UL transmission. In some implementations, this may be limited to cases where the HARQ-ACK codebook may be indicated with a specific priority. For example, when the transmission of the HARQ-ACK codebook is indicated through DCI indicated with a C-RNTI (i.e., with the CRC scrambled with the C-RNTI), the UE may generate the HARQ-ACK codebook for all DL HARQ process(es) regardless of the priority. If the transmission of the HARQ-ACK codebook is indicated through DCI indicated with the CS-RNTI (i.e., with the CRC scrambled with the CS-RNTI), the UE may generate the HARQ-ACK codebook for the SPS configuration with a specific priority based on the priority indicator contained in the DCI. The UE and the BS may always assume a low or high priority for the transmission of the HARQ-ACK codebook through DCI indicated with a C-RNTI, and may assume a specific priority for the transmission of the HARQ-ACK codebook through DCI indicated with a CS-RNTI based on the priority indicator contained in the DCI.

According to implementation A4, the SPS configuration(s) related to the generation/formation/transmission of the HARQ process-based HARQ-ACK codebook in implementation A1 and/or implementation A3 may be limited to the SPS configuration(s) having a priority that is the same as the priority determined based on the priority indicator contained in the L1 signaling (e.g., the DCI that triggers the transmission of the HARQ process-based HARQ-ACK codebook).

### BS perspective:

Some implementations of the present disclosure described above will be described again from the BS perspective.

FIG. 13 illustrates an example of the flow of BS operations according to some implementations of the present disclosure.

The BS may transmit, to the UE, a TDD configuration (e.g., *tdd-UL-DL-ConfigurationCommon, tdd-UL-DL-ConfigurationDedicated*) and an SPS configuration(s) for the SPS radio resource. The BS may perform SPS PDSCH transmission on the downlink radio resource based on the SPS configuration(s). The BS may transmit a request for HARQ-ACK process based SPS HARQ-ACK feedback to the UE (S1303). The BS may receive, from the UE, a HARQ-ACK codebook containing only HARQ-ACK information for HARQ-ACK processes for the SPS configuration(s) (S1305).

In some implementations, the BS may assume that the UE preferentially defers HARQ-ACK transmission in response to reception of an SPS PDSCH, based on a configuration by the BS. Alternatively, in some implementations, the BS may expect that the UE will not perform PUCCH transmission after receiving the SPS PDSCH only if the related PUCCH resource X includes a downlink radio resource. The BS may send an indication of transmission of the HARQ-ACK codebook to the UE through a DCI transmission on the PDCCH when the PUCCH transmission from the UE is deferred or cannot be carried by the downlink radio resource. In some implementations of the present disclosure, the BS to transmit the indication of transmission of the HARQ-ACK codebook through the DCI may transmit the DCI by scrambling the CRC of the DCI with a CS-RNTI. The BS may expect to receive, from the UE, a HARQ-ACK codebook formed/generated based on the HARQ process ID included in the SPS configuration and the SPS PDSCH.

In implementations of the present disclosure, the following BS operations may be considered.

### <Implementation B1> HARQ process based HARQ-ACK codebook for SPS PDSCH

The BS may instruct the UE to form the HARQ-ACK codebook for the SPS PDSCH(s) as follows.
> A HARQ-ACK codebook (i.e., the HARQ-ACK information bit(s) to be included in the HARQ-ACK codebook) is formed for each cell for which SPS configuration is provided. In other words, the HARQ-ACK information bits to be included in the HARQ process based HARQ-ACK codebook are determined for each cell for which SPS configuration is provided. In some implementations of the present disclosure, the HARQ processes of all cells for which SPS configuration is provided may be considered in the formation of the HARQ-ACK codebook. Alternatively, in some implementations of the present disclosure, only the HARQ processes for the enabled cells among the cells for which SPS configuration is provided may be considered in the formation of the HARQ-ACK codebook.
> For each cell, a HARQ-ACK codebook (i.e., the HARQ-ACK information bit(s) to be included in the HARQ-ACK codebook) is formed using at least one of the following methods:

### >> Method 1-1:

FIG. 11 illustrates another example of a HARQ process-based HARQ-ACK codebook according to some implementations of the present disclosure. In FIG. 11, "AN" refers to HARQ-ACK information and "HP" refers to a HARQ process.
>>> Referring to FIG. 11, a HARQ-ACK codebook (i.e., the HARQ-ACK information bit(s) to be included in the HARQ-ACK codebook) is formed for each index of the SPS configuration provided for each cell.
>>> Referring to FIG. 11, for each index of the SPS configuration, a HARQ-ACK codebook (i.e., the HARQ-ACK information bit(s) to be included in the HARQ-ACK codebook) is formed for each HARQ process ID configured by the SPS configuration.
>>> In some implementations related to Method 1-1, only the enabled SPS configuration(s) may be considered in determining/forming the HARQ-ACK codebook. In this case, the size of the HARQ-ACK codebook may be minimized, and the reliability of the HARQ-ACK codebook may be increased.
>>> Alternatively, in some implementations related to Method 1-1, the HARQ process(es) of the entire SPS configuration(s), including the disabled SPS configuration(s), may be considered when the HARQ-ACK codebook is determined/formed. In this case, ambiguities related to the size of the HARQ-ACK codebook that may arise due to missing DCI may be eliminated, and the burden on blind decoding, in which the BS attempts to detect the HARQ-ACK codebook while changing the HARQ-ACK codebook size, may be reduced.

### >> Method 1-2:

FIG. 12 illustrates another example of a HARQ process-based HARQ-ACK codebook according to some implementations of the present disclosure. In FIG. 12, "AN" refers to HARQ-ACK information, and "HP" refers to a HARQ process.
>>> Referring to FIG. 12, a HARQ-ACK codebook (i.e., the HARQ-ACK information bit(s) to be included in the HARQ-ACK codebook) is formed for each HARQ process ID configured in the SPS configuration(s) provided for each cell.
>>> In some implementations related to Method 1-2, only the enabled SPS configuration(s) may be considered in determining/forming the HARQ-ACK codebook. In this case, the size of the HARQ-ACK codebook may be minimized and the reliability of the HARQ-ACK codebook may be increased.
>>> Alternatively, in some implementations related to Method 1-2, the HARQ process(es) of the entire SPS configuration(s), including the disabled SPS configuration(s), may be considered when the HARQ-ACK codebook is determined/formed. In this case, ambiguities related to the size of the HARQ-ACK codebook that may arise due to missing DCI may be eliminated, and the burden on blind decoding, in which the BS attempts to detect the HARQ-ACK codebook while changing the HARQ-ACK codebook size, may be reduced. In these implementations, it may be assumed that there is no overlap between SPS PDSCHs.

### >> Method 1-3:

A HARQ-ACK codebook (i.e., the HARQ-ACK information bit(s) to be included in the HARQ-ACK codebook) is formed for each DL HARQ process ID configured for each cell (see FIG. 9).

### >> Methods 1-4:

>>> For each cell, a HARQ-ACK codebook (i.e., the HARQ-ACK information bit(s) to be included in the HARQ-ACK codebook) is formed for each index of the SPS configuration provided for each cell.
>>> For each index of the SPS configuration, a HARQ-ACK codebook (i.e., the HARQ-ACK information bit(s) to be included in the HARQ-ACK codebook) is formed for each SPS PDSCH period in which reception is configured to start or end for a certain time. The certain time may be X symbols/subslots/slots preceding the last symbol in which the BS transmitted the indication of transmission of the HARQ-ACK codebook. When the difference between the time T preceding the last symbol and the last symbol 1 is defined as the certain time, the duration of the certain time may be X symbols, X subslots, or X slots. The value of X may be a predetermined value, or a value set by higher layer signaling from the BS, or a value included in the indication of transmission of the HARQ-ACK codebook from the BS, or a value determined by the capability signaling pre-reported by the UE and the least of the DL/UL subcarrier spacings in use.
>>> In some implementations related to Method 1-4, only the enabled SPS configuration(s) may be considered in determining/forming the HARQ-ACK codebook. In this case, the size of the HARQ-ACK codebook may be minimized and the reliability of the HARQ-ACK codebook may be increased.
>>> Alternatively, in some implementations related to Method 1-4, the HARQ process(es) of the entire SPS configuration(s), including the disabled SPS configuration(s), may be considered when the HARQ-ACK codebook is determined/formed. In this case, ambiguities related to the size of the HARQ-ACK codebook that may arise due to missing DCI may be eliminated, and the burden on blind decoding, in which the BS attempts to detect the HARQ-ACK codebook while changing the HARQ-ACK codebook size, may be reduced.

### >> Method 1-5:

>>> For each cell, a group(s) of SPS configurations provided for each cell may be configured. Each SPS configuration may be assigned a group index, and SPS configuration(s) with the same group index may be considered as the same group. Alternatively, for each group, RRC parameters including multiple SPS configuration indexes may be provided to indicate member SPS configurations in the group. In some implementations, DCI indicating transmission of a HARQ-ACK codebook for the SPS PDSCH may indicate a group of SPS configurations as well.
>> A HARQ-ACK codebook (i.e., the HARQ-ACK information bit(s) to be included in the HARQ-ACK codebook) may be formed for the respective indexes of the SPS configurations in the indicated group.
>>> For the index of each SPS configuration, a HARQ-ACK codebook (i.e., the HARQ-ACK information bit(s) to be included in the HARQ-ACK codebook) may be formed for each HARQ process ID configured by the corresponding SPS configuration.
>>> In some implementations related to Method 1-2, only the enabled SPS configuration(s) may be considered in determining/forming the HARQ-ACK codebook. In this case, the size of the HARQ-ACK codebook may be minimized and the reliability of the HARQ-ACK codebook may be increased.
>>> Alternatively, in some implementations related to Method 1-1, the HARQ process(es) of the entire SPS configuration(s), including the disabled SPS configuration(s), may be considered when the HARQ-ACK codebook is determined/formed. In this case, ambiguities related to the size of the HARQ-ACK codebook that may arise due to missing DCI may be eliminated, and the burden on blind decoding, in which the BS attempts to detect the HARQ-ACK codebook while changing the HARQ-ACK codebook size, may be reduced. In these implementations, it may be assumed that there is no overlap between SPS PDSCHs.
> For each HARQ process ID (or each SPS PDSCH time), the following information may be included in the HARQ process-based HARQ-ACK codebook.
>> For each TB that is being transmitted through each HARQ process ID (or transmitted through each SPS PDSCH period) (e.g., TBs that have been transmitted but have not yet completed a successful transmission due to unsuccessful decoding on the UE, or TBs that require retransmission):
   >>> HARQ-ACK information bits indicating the (last) decoding result of a TB that is being transmitted by the corresponding HARQ process (or transmitted through the corresponding SPS PDSCH period) (e.g., a TB that has been transmitted but has not yet completed a successful transmission due to unsuccessful decoding on the UE, or a TB that requires retransmission).
   >>>> The length of the HARQ-ACK information bit for one TB may be determined by the set maximum number of CBGs. This is intended to allow the UE to transmit HARQ-ACK information on a per CBG basis, while ensuring that the total HARQ-ACK codebook length does not vary depending on the number of CBGs for the scheduled PDSCH.
   >>>> In this case, the decoding result of the TB may only mean the result of the TB whose transmission has been initiated by an SPS PDSCH. When a TB that is being transmitted in the corresponding HARQ process (e.g., a TB that has been transmitted but has not yet completed a successful transmission due to unsuccessful decoding, or a TB that requires retransmission) is indicated through DCI in which CRC is scrambled with C-RNTI or MCS-C-RNTI, the HARQ-ACK information bits may indicate the decoding result of the TB first transmitted on the SPS PDSCH in the corresponding HARQ process prior to the indication of the HARQ-ACK transmission, or may contain non-significant information or values as a simple placeholder to keep the length of the HARQ-ACK codebook constant.
   >>> Value of a new data indicator (NDI) of a TB that is being transmitted by the corresponding HARQ process (or received through the corresponding SPS PDSCH period) (e.g., a TB that has been transmitted but has not yet completed a successful transmission due to unsuccessful decoding on the UE, or a TB that requires retransmission).
   >>>> In some implementations, the value of the NDI may not be included in the HARQ process-based HARQ-ACK codebook, depending on a parameter (e.g., *pdsch-HARQ-ACK-OneShotFeedbackNDI-r16*) configured by higher layer signaling of the BS.
   >>>> Alternatively, in some implementations, if the HARQ-ACK codebook is generated based on SPS PDSCH only, the NDI value may be omitted. For example, if Methods 1-4 are used, or if Methods 1-1 or Method 1-2 are used and only HARQ-ACK information is reported for TBs initiated by SPS PDSCH, the NDI value may be omitted.
   >>>> In the case where the HARQ-ACK codebook is generated based on SPS PDSCH only, the value of the NDI may indicate multiple SPS configurations containing the corresponding HARQ process in ascending order of the indexes thereof. When the number of the SPS configurations containing the HARQ process is N, the value of the NDI may be expressed in ceil{log₂(N)) bit(s). Alternatively, when the value of the NDI is in M bit(s), the number of the SPS configurations containing the HARQ process may be limited to 2^{M}.
   >>>> In the case where the HARQ-ACK codebook is generated based on all DL HARQ process(es) in the cell, the value of the NDI may be determined as follows.
   >>>>> The value of the NDI field indicated in the DCI that indicates a TB that is being transmitted (e.g., a TB that has been transmitted but has not yet completed a successful transmission due to unsuccessful decoding on the UE, or a TB that requires retransmission). This may be limited to the case where the CRC of the DCI is scrambled to a C-RNTI.
   >>>>> A specific value (e.g., 1) may always be used in the case where a TB being transmitted (e.g., a TB that has been transmitted but has not yet completed a successful transmission due to unsuccessful decoding on the UE, or a TB that requires retransmission) has been initiated by an SPS PDSCH, or a TB has been scheduled by the DCI in which CRC is scrambled with a CS-RNTI.
   >>>>> Alternatively, the value of the NDI may be extended to 2 bits to differentiate SPS PDSCHs and PDSCHs dynamically indicated by CS-RNTI from PDSCHs indicated by C-RNTI and MCS-C-RNTI. For the NDI extended to 2 bits, in the case where a TB that is being transmitted (e.g., a TB that has been transmitted but has not yet completed a successful transmission due to unsuccessful decoding on the UE, or a TB that requires retransmission) is indicated by DCI in which CRC is scrambled with the C-RNTI or MCS-C-RNTI, the value of the NDI field in the DCI may be indicated by the least significant bit (LSB). In the case where a TB being transmitted (e.g., a TB that has been transmitted but has not yet completed a successful transmission due to unsuccessful decoding on the UE, or a TB that requires retransmission) has been initiated by an SPS PDSCH, the most significant bit (MSB) may indicate 0 as the value of the NDI for an initial transmission and 1 as the value of the NDI for a retransmission with CS-RNTI.
   >>> In the case where the HARQ-ACK codebook is generated based on SPS PDSCH only, the number of TBs and CBGs transmitted in each HARQ process may always be assumed to be 1. In other words, only the 1-bit HARQ-ACK information bit and one NDI may always be reported for the HARQ process associated with the SPS PDSCH, regardless of whether the scheduling of CBGs or multiple codewords is supported.

### <Implementation B2> How to trigger HARQ process based HARQ-ACK codebook for SPS PDSCH

The BS may make a request to the UE to transmit a HARQ-ACK codebook for SPS PDSCH, and the UE may receive the request and transmit to the BS a HARQ-ACK codebook formed according to implementation A1/implementation B1 or a Type 1/Type-2/Type-3 HARQ-ACK codebook.

The BS may configure a separate DCI field to indicate the transmission of the HARQ process based HARQ-ACK codebook for the SPS PDSCH. Alternatively, the BS may indicate the transmission of the HARQ-ACK codebook for the SPS PDSCH using the "One-shot HARQ-ACK request field" used in the indication of the Type-3 HARQ-ACK codebook. In this case, the following methods may be used to distinguish the codebook from the DCI indicating the Type-3 HARQ-ACK codebook.
> Method 2-1: The HARQ process based HARQ-ACK codebook for the SPS PDSCH may be distinguished by the RNTI used to scramble the CRC of the DCI indicating the transmission of the HARQ-ACK codebook. For example, when the CS-RNTI is used, a HARQ-ACK codebook formed/generated by implementation A1/implementation B1 or a Type-3 HARQ-ACK codebook considering only the HARQ process(es) included in the SPS configuration(s) may be transmitted. When the C-RNTI or MCS-C-RNTI is used, a Type-3 HARQ-ACK codebook generated regardless of the type of scheduling may be transmitted. When the CS-RNTI is used, in some implementations, the value of the NDI may be indicated as 1 to distinguish from SPS enable/disable. When the CS-RNTI is used, in some implementations, the value of the HARQ process number may be indicated with all bits set to 1 to distinguish from SPS enable/disable. When the CS-RNTI is used, in some implementations, the value of the redundancy version (RV) may be indicated with all bits set to 1 or may be indicated as "01" or "1" to distinguish from the SPS enable/disable. By indicating an RV index of 3 or 1, which is generally not used for initial transmissions, the possibility of misrecognizing the DCI triggering the HARQ process-based HARQ-ACK codebook for SPS PDSCH as normal scheduling may be reduced.
> Method 2-2: Through higher layer signaling from the BS, it can be configured whether the "One-shot HARQ-ACK request field" is to indicate the transmission of the HARQ-ACK codebook generated/formed considering only the SPS PDSCH, or the transmission of the HARQ-ACK codebook for all HARQ process(es).
> Method 2-3: The "One-shot HARQ-ACK request field" may be extended or an additional 1-bit long field may be formed in the DCI. For example, if a 2-bit "One-shot HARQ-ACK request field" is configured and the value of the field is "10", a HARQ-ACK codebook configured through implementation A1/implementation B1 or a Type-3 HARQ-ACK codebook considering only the HARQ process(es) included in the SPS configuration may be transmitted. If the value of the field is "01", a Type-3 HARQ-ACK codebook considering all HARQ processes may be transmitted. Alternatively, in some implementations, the indication of the HARQ-ACK codebook transmission for the SPS PDSCH may only support HARQ-ACK codebook transmission without PDSCH scheduling, and the UE may only multiplex the HARQ-ACK codebook into PUCCH or PUSCH in the slot or subslot determined by the indication of the HARQ-ACK codebook transmission. To distinguish the indication from the DCI indicating a Type-3 HARQ-ACK codebook, a HARQ-ACK codebook transmission indication matching at least one of the followings may be considered.
>> DCI containing the "One-shot HARQ-ACK request field" set to 1.
>> DCI in which the CRC is scrambled with CS-RNTI
>> DCI with a frequency domain resource assignment field set to the following values according to the configured parameter *resourceAllocation:*
   >>> When *resourceAllocation = resourceAllocationType*0*,* all bits of the frequency domain resource assignment field in the DCI format are equal to 0; or
   >>> When *resourceAllocation = resourceAllocationType*1*,* all bits of the frequency domain resource assignment field in the DCI format are equal to 1; or
   >>> When *resourceAllocation = dynamicSwitch,* all bits of the frequency domain resource assignment field in the DCI format are equal to 0 or 1.
>> DCI in which all bits of the HARQ process number field are indicated as 1.
>> DCI in which the value of the NDI field for the enabled TB is indicated as 0 or 1. For example, i) the value of the NDI may be indicated as 1 and all bits of the HARQ process number field may be indicated as 1 to distinguish from SPS enable/disable, or ii) the value of the NDI may be indicated as 0 and the value of the frequency domain resource assignment field may be indicated as an invalid value to distinguish from SPS PDSCH retransmission.
>> DCI in which all values of the MCS field are indicated as 0 or 1. For example, when the value of the NDI is 1, all values of the MCS field may be indicated as 0 to distinguish from SPS disabling. In another example, all values of the MCS field may be indicated as 1 to distinguish from SPS enabling or retransmission scheduling.
>> DCI in which all bits of the redundancy version field are indicated as 1, or indicated as "01" or "1". For example, when the NDI is equal to 1, all bits of the redundancy version value may be indicated as 1, or indicated as "01" or "1" to distinguish from SPS enable/disable.

### <Implementation B3> PDSCH scheduling with HARQ-ACK codebook for SPS PDSCH)

In applying implementation A2/implementation B2, when the BS indicates to the UE that a HARQ-ACK codebook for SPS PDSCHs (hereinafter referred to as SPS PDSCH HARQ-ACK codebook) is to be transmitted along with the PDSCH scheduling, the BS may assume or expect that the UE will multiplex the HARQ-ACK feedback for the scheduled PDSCH and the indicated SPS PDSCH HARQ-ACK codebook using the following methods.
> Method 3-1: The UE may concatenate the HARQ-ACK response to one scheduled PDSCH with the indicated HARQ-ACK codebook and transmit the same. For example, the UE may transmit a HARQ-ACK response to one DG PDSCH and a HARQ-ACK response to multiple HARQ processes related to an SPS PDSCH in a multiplexed manner.
> Method 3-2: The UE may concatenate the HARQ-ACK codebook transmitted in performing dynamic scheduling with the SPS PDSCH HARQ-ACK codebook indicated according to implementation A2/implementation B2 and transmit the codebooks. For example, the UE may transmit a Type-1/Type-2 HARQ-ACK codebook for a dynamically scheduled PDSCH and a HARQ-ACK response to multiple HARQ processes related to the SPS PDSCH(s) in a multiplexed manner.

### <Implementation B4> HARQ-ACK codebook for SPS PDSCH with priority indication

In applying implementation A1/implementation B1 and/or implementation A2/implementation B2, when the transmission of a HARQ-ACK codebook for an SPS PDSCH is indicated through L1 signaling (e.g., PDCCH) and a priority (e.g., priority index) is configured in each SPS configuration, the UE and BS may generate and trigger the HARQ-ACK codebook for the (SPS) PDSCH with the configured priority as follows.
> When the BS indicates to the UE, through L1 signaling containing a priority indicator, that transmission of the HARQ-ACK codebook for the SPS PDSCH is to be performed, the BS and the UE may only consider, in the generation of the HARQ-ACK codebook in implementation A1/implementation B1, the SPS configuration(s) with the priority indicated by the priority indicator contained in the L1 signaling. For example, the BS may assume or expect that the UE will generate a HARQ-ACK codebook of SPS configuration(s) with a specific priority based on the priority indicator contained in the DCI that has triggered the transmission of the HARQ-ACK codebook.
> To receive from the UE a HARQ-ACK codebook of SPS configuration(s) with a specific priority, the BS may indicate to the UE that the transmission of the HARQ-ACK codebook for the SPS PDSCH is to be performed, by L1 signaling with a priority indicator indicating the priority.
> In the case where the transmission of the HARQ-ACK codebook is indicated by L1 signaling with the priority indicator, the transmission of the HARQ-ACK codebook may be treated as a transmission with the same priority as the priority indicated by the priority indicator. For example, in the case where the transmission of the HARQ-ACK codebook is indicated by L1 signaling that indicates a high priority: if the transmission of the HARQ-ACK codebook overlaps (in time) with a low priority UL transmission, the transmission of the HARQ-ACK codebook may be prioritized over the low priority UL transmission, and thus the low priority UL transmission may be canceled; if the transmission of the HARQ-ACK codebook overlaps (in time) with another high priority UL transmission, the transmission of the HARQ-ACK codebook may be multiplexed with the other high priority UL transmission. In some implementations, this may be limited to cases where the HARQ-ACK codebook may be indicated with a specific priority. For example, if the BS has indicated the transmission of the HARQ-ACK codebook through DCI indicated with a C-RNTI (i.e., with the CRC scrambled with the C-RNTI), the BS may assume that the UE will generate the HARQ-ACK codebook for all DL HARQ process(es) regardless of the priority. If the BS has indicated the transmission of the HARQ-ACK codebook is through DCI indicated with the CS-RNTI (i.e., with the CRC scrambled with the CS-RNTI), the BS may assume that the UE will generate the HARQ-ACK codebook for the SPS configuration with a specific priority based on the priority indicator contained in the DCI. The UE and the BS may always assume a low or high priority for the transmission of the HARQ-ACK codebook through DCI indicated with a C-RNTI, and may assume a specific priority for the transmission of the HARQ-ACK codebook through DCI indicated with a CS-RNTI based on the priority indicator contained in the DCI.

According to implementation B4, the SPS configuration(s) related to the generation/formation/reception of the HARQ process-based HARQ-ACK codebook in implementation B1 and/or implementation B3 may be limited to the SPS configuration(s) having a priority that is the same as the priority determined based on the priority indicator contained in the L1 signaling (e.g., the DCI that triggers the transmission of the HARQ process-based HARQ-ACK codebook).

In some implementations of the present disclosure, the BS may provide TDD configuration and RRC configuration, such as SPS configuration(s), to the UE. In some implementations, while the BS is transmitting the SPS PDSCH to the UE, the UE may cancel the transmission of the HARQ-ACK PUCCH for the SPS PDSCH. In some implementations of the present disclosure, the BS may instruct the UE to generate/transmit a separate HARQ-ACK codebook for the SPS PDSCH(s). The UE may generate aHARQ-ACK codebook according to some implementations of the present disclosure and transmit the same over an uplink resource as indicated by the BS.

According to some implementations of the present disclosure, the BS may request the UE to feed back only HARQ-ACK information for the SPS PDSCH(s). In some implementations of the present disclosure, the BS may indicate retransmission of canceled PUCCH transmission, which may reduce unnecessary PDSCH retransmissions and further reduce the delay due to PDSCH retransmissions. In some implementations of the present disclosure, the UE may report the reception result for each HARQ process to the BS only for the SPS PDSCH(es), which may result in less uplink overhead compared to the existing Type-3 HARQ-ACK codebook that includes HARQ-ACK information for all HARQ processes. In some implementations of the present disclosure, the size of the payload of the HARQ-ACK codebook may be smaller than the size of the payload of the existing Type-3 HARQ-ACK codebook, and thus higher PUCCH/PUSCH reliability may be achieved.

For receiving a DL channel, a UE may perform operations according to some implementations of the present disclosure. The UE may include: at least one transceiver; at least one processor; and at least one computer memory operably connected to the at least one processor and configured to store instructions that, when executed, cause the at least one processor to perform the operations according to some implementations of the present disclosure. A processing device for a UE may include: at least one processor; and at least one computer memory operably connected to the at least one processor and configured to store instructions that, when executed, cause the at least one processor to perform the operations according to some implementations of the present disclosure. A computer-readable (non-transitory) storage medium may store at least one computer program including instructions that, when executed by at least one processor, cause the at least one processor to perform the operations according to some implementations of the present disclosure. A computer program or computer program product may include instructions stored on at least one computer-readable (non-volatile) storage medium and, when executed, cause (at least one processor) to perform the operations according to some implementations of the present disclosure.

In the UE, the processing device, the computer-readable (non-volatile) storage medium, and/or the computer program product, the operations include receiving a request for HARQ process-based HARQ-ACK feedback, and transmitting a HARQ process-based HARQ-ACK codebook based on the request. The request is a request for HARQ-ACK process-based HARQ-ACK feedback for the SPS. The HARQ process-based HARQ-ACK codebook contains only HARQ-ACK information for the HARQ-ACK processes of the SPS configurations.

In some implementations, the HARQ process-based HARQ-ACK codebook may contain HARQ-ACK information for at least one serving cell, wherein the HARQ-ACK information for the at least one serving cell may contain HARQ-ACK information for HARQ-ACK processes for each index of SPS configurations for each of the at least one serving cell.

In some implementations, the HARQ process-based HARQ-ACK codebook may contain HARQ-ACK information for the at least one serving cell, wherein the HARQ-ACK information for the at least one serving cell may include HARQ-ACK information for each HARQ-ACK process ID for an SPS configuration for each of the at least one serving cell.

In some implementations, the SPS configurations may be enabled SPS configurations among SPS configurations provided to the UE.

In some implementations, the request may be received through downlink control information (DCI).

In some implementations, the DCI may include a CRC scrambled with a CS-RNTI.

In some implementations, the SPS configurations may have a priority identical to a priority related to a priority indicator in the DCI among SPS configurations provided to the UE.

For transmitting a DL channel, a BS may perform operations according to some implementations of the present disclosure. The BS may include: at least one transceiver; at least one processor; and at least one computer memory operably connected to the at least one processor and configured to store instructions that, when executed, cause the at least one processor to perform the operations according to some implementations of the present disclosure. A processing device for a BS may include: at least one processor; and at least one computer memory operably connected to the at least one processor and configured to store instructions that, when executed, cause the at least one processor to perform the operations according to some implementations of the present disclosure. A computer-readable (non-transitory) storage medium may store at least one computer program including instructions that, when executed by at least one processor, cause the at least one processor to perform the operations according to some implementations of the present disclosure. A computer program or computer program product may include instructions stored on at least one computer-readable (non-volatile) storage medium and, when executed, cause (at least one processor) to perform the operations according to some implementations of the present disclosure.

In the BS, the processing device, the computer-readable (non-volatile) storage medium, and/or the computer program product, the operations include transmitting a request for HARQ process-based HARQ-ACK feedback, and receiving a HARQ process-based HARQ-ACK codebook based on the request. The request is a request for HARQ-ACK process-based HARQ-ACK feedback for the SPS. The HARQ process-based HARQ-ACK codebook contains only HARQ-ACK information for the HARQ-ACK processes of the SPS configurations.

In some implementations, the HARQ process-based HARQ-ACK codebook may contain HARQ-ACK information for at least one serving cell, wherein the HARQ-ACK information for the at least one serving cell may contain HARQ-ACK information for HARQ-ACK processes for each index of SPS configurations for each of the at least one serving cell.

In some implementations, the HARQ process-based HARQ-ACK codebook may contain HARQ-ACK information for the at least one serving cell, wherein the HARQ-ACK information for the at least one serving cell may include HARQ-ACK information for each HARQ-ACK process ID for an SPS configuration for each of the at least one serving cell.

In some implementations, the SPS configurations may be enabled SPS configurations among SPS configurations provided to the UE.

In some implementations, the request may be transmitted through downlink control information (DCI).

In some implementations, the DCI may include a CRC scrambled with a CS-RNTI.

In some implementations, the SPS configurations may have a priority identical to a priority related to a priority indicator in the DCI among SPS configurations provided to the UE.

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the principles and features disclosed herein.

The implementations of the present disclosure may be used in a BS, a UE, or other equipment in a wireless communication system.

## Claims

1. A method for transmitting hybrid automatic repeat request-acknowledgment, HARQ-ACK, information by a user equipment, UE, in a wireless communication system, the method comprising:
receiving (S1003) downlink control information, DCI, including downlink scheduling information and a request for a hybrid automatic repeat request, HARQ, process-based HARQ-ACK feedback related to semi-persistent scheduling, SPS;
generating (S1005) a HARQ process-based HARQ-ACK codebook based on the request and a HARQ-ACK information based on the downlink scheduling information;
obtaining a HARQ-ACK response by concatenating the HARQ process-based HARQ-ACK codebook and the HARQ-ACK information; and
transmitting the HARQ-ACK response,
wherein the HARQ process-based HARQ-ACK codebook contains only HARQ-ACK information for HARQ-ACK processes of SPS configurations.

2. The method of claim 1, wherein the HARQ process-based HARQ-ACK codebook contains HARQ-ACK information for at least one serving cell,
wherein the HARQ-ACK information for the at least one serving cell comprises the HARQ-ACK information for the HARQ-ACK processes for each index of SPS configurations for each of the at least one serving cell.

3. The method of claim 1, wherein the HARQ process-based HARQ-ACK codebook contains HARQ-ACK information for at least one serving cell,
wherein the HARQ-ACK information for the at least one serving cell comprises HARQ-ACK information for each HARQ-ACK process identifier, ID, for an SPS configuration for each of the at least one serving cell.

4. The method of claim 1 or 3, wherein the SPS configurations are activated SPS configurations among SPS configurations provided to the UE.

5. The method of claim 1, wherein the DCI comprises a cyclic redundancy check, CRC, scrambled with a configured scheduling radio network temporary identifier, CS-RNTI.

6. The method of claim 1, wherein the SPS configurations have a priority identical to a priority related to a priority indicator in the DCI among SPS configurations provided to the UE.

7. A user equipment (100, 200) for transmitting hybrid automatic repeat request-acknowledgment, HARQ-ACK, information for a wireless communication system, the user equipment (100, 200) comprising:
at least one transceiver (106, 206);
at least one processor (102, 202); and
at least one computer memory (104, 204) operatively connected to the at least one processor (102, 202) and having stored therein instructions that, when executed, cause the at least one processor (102, 202) to perform operations according to the method of any one of claims 1 to 6.

8. A computer readable storage medium, wherein the storage medium stores at least one program code containing instructions that, when executed, cause at least one processor to perform operations according to the method of any one of claims 1 to 6.

9. A method for receiving hybrid automatic repeat request-acknowledgment, HARQ-ACK, information by a base station in a wireless communication system, the method comprising:
transmitting (S1303) downlink control information, DCI, including downlink scheduling information and a request for a hybrid automatic repeat request, HARQ, process-based HARQ-ACK feedback related to semi-persistent scheduling, SPS; and
receiving (S1305), based on the DCI, a HARQ-ACK response,
wherein the HARQ-ACK response is concatenating a HARQ process-based HARQ-ACK codebook related to the request and a HARQ-ACK information related to the downlink scheduling information,
wherein the HARQ process-based HARQ-ACK codebook contains only HARQ-ACK information for HARQ-ACK processes of SPS configurations.

10. A base station (100, 200) for receiving hybrid automatic repeat request-acknowledgment, HARQ-ACK, information **for** a wireless communication system, the base station comprising:
at least one transceiver (106, 206);
at least one processor (102, 202); and
at least one computer memory (104, 204) operatively connected to the at least one processor (102, 202) and having stored therein instructions that, when executed, cause the at least one processor (102, 202) to perform operations according to the method of claim 9.

## Patentansprüche

1. Verfahren zum Übertragen von Hybrid-Automatic-Repeat-Request-Acknowledgment-, HARQ-ACK-, Informationen durch ein Benutzergerät, UE, in einem Drahtloskommunikationssystem, wobei das Verfahren Folgendes umfasst:
• Empfangen (S1003) von Downlink-Steuerungsinformationen, DCI, die Downlink-Planungsinformationen und eine Anforderung für eine auf einem Hybrid-Automatic-Repeat-Request-, HARQ-, Prozess basierende HARQ-ACK-Rückkopplung bezüglich einer semipersistenten Planung, SPS, enthalten;
• Generieren (S1005) eines HARQ-Prozess-basierten HARQ-ACK-Codebuchs basierend auf der Anforderung und einer HARQ-ACK-Information basierend auf den Downlink-Planungsinformationen;
• Erhalten einer HARQ-ACK-Antwort durch Verketten des HARQ-Prozess-basierten HARQ-ACK-Codebuchs und der HARQ-ACK-Information; und
• Übertragen der HARQ-ACK-Antwort,
• wobei das HARQ-Prozess-basierte HARQ-ACK-Codebuch nur HARQ-ACK-Informationen für HARQ-ACK-Prozesse von SPS-Konfigurationen enthält.

2. Verfahren nach Anspruch 1, wobei das HARQ-Prozess-basierte HARQ-ACK-Codebuch HARQ-ACK-Informationen für mindestens eine versorgende Zelle enthält, wobei die HARQ-ACK-Information für die mindestens eine versorgende Zelle die HARQ-ACK-Informationen für die HARQ-ACK-Prozesse für jeden Index von SPS-Konfigurationen für jede der mindestens einen versorgenden Zelle umfasst.

3. Verfahren nach Anspruch 1, wobei das HARQ-Prozess-basierte HARQ-ACK-Codebuch HARQ-ACK-Informationen für mindestens eine versorgende Zelle enthält, wobei die HARQ-ACK-Information für die mindestens eine versorgende Zelle HARQ-ACK-Informationen für jede HARQ-ACK-Prozesskennung, -ID, für eine SPS-Konfiguration für jede der mindestens einen versorgenden Zelle umfasst.

4. Verfahren nach Anspruch 1 oder 3, wobei die SPS-Konfigurationen aktivierte SPS-Konfigurationen unter SPS-Konfigurationen sind, die dem UE bereitgestellt werden.

5. Verfahren nach Anspruch 1, wobei die DCI eine zyklische Redundanzprüfung, CRC, umfassen, die mit einer temporären Funknetzidentität für konfigurierte Planung, CS-RNTI, gescrambelt ist.

6. Verfahren nach Anspruch 1, wobei die SPS-Konfigurationen eine Priorität aufweisen, die identisch ist mit einer Priorität bezüglich eines Prioritätsindikators in den DCI unter SPS-Konfigurationen, die dem UE bereitgestellt werden.

7. Benutzergerät (100, 200) zum Übertragen von Hybrid-Automatic-Repeat-Request-Acknowledgment-, HARQ-ACK-, Informationen für ein Drahtloskommunikationssystem, wobei das Benutzergerät (100, 200) Folgendes umfasst:
• mindestens einen Sendeempfänger (106, 206);
• mindestens einen Prozessor (102, 202); und
• mindestens einen Computerspeicher (104, 204), der betriebsmäßig mit dem mindestens einen Prozessor (102, 202) verbunden ist und darin gespeicherte Anweisungen aufweist, die bei Ausführung den mindestens einen Prozessor (102, 202) veranlassen, Operationen gemäß dem Verfahren nach einem der Ansprüche 1 bis 6 durchzuführen.

8. Computerlesbares Speichermedium, wobei das Speichermedium mindestens einen Programmcode speichert, der Anweisungen enthält, die bei Ausführung mindestens einen Prozessor veranlassen, Operationen gemäß dem Verfahren nach einem der Ansprüche 1 bis 6 durchzuführen.

9. Verfahren zum Empfangen von Hybrid-Automatic-Repeat-Request-Acknowledgment-, HARQ-ACK-, Informationen durch eine Basisstation in einem Drahtloskommunikationssystem, wobei das Verfahren Folgendes umfasst:
• Übertragen (S1303) von Downlink-Steuerungsinformationen, DCI, die Downlink-Planungsinformationen und eine Anforderung für eine auf einem Hybrid-Automatic-Repeat-Request-, HARQ-, Prozess basierende HARQ-ACK-Rückkopplung bezüglich einer semipersistenten Planung, SPS, enthalten; und
• Empfangen (S1305), basierend auf den DCI, einer HARQ-ACK-Antwort,
• wobei die HARQ-ACK-Antwort durch Verketten eines auf der Anforderung bezogenen HARQ-Prozess-basierten HARQ-ACK-Codebuchs und einer auf den Downlink-Planungsinformationen bezogenen HARQ-ACK-Information erhalten wird,
• wobei das HARQ-Prozess-basierte HARQ-ACK-Codebuch nur HARQ-ACK-Informationen für HARQ-ACK-Prozesse von SPS-Konfigurationen enthält.

10. Basisstation (100, 200) zum Empfangen von Hybrid-Automatic-Repeat-Request-Acknowledgment-, HARQ-ACK-, Informationen für ein Drahtloskommunikationssystem, wobei die Basisstation Folgendes umfasst:
• mindestens einen Sendeempfänger (106, 206);
• mindestens einen Prozessor (102, 202); und
• mindestens einen Computerspeicher (104, 204), der betriebsmäßig mit dem mindestens einen Prozessor (102, 202) verbunden ist und darin gespeicherte Anweisungen aufweist, die bei Ausführung den mindestens einen Prozessor (102, 202) veranlassen, Operationen gemäß dem Verfahren nach Anspruch 9 durchzuführen.

## Revendications

1. Procédé de transmission d'informations d'accusé de réception de demande de répétition automatique hybride, HARQ-ACK, par un équipement utilisateur, UE, dans un système de communication sans fil, le procédé comprenant :
• la réception (S1003) d'informations de commande de liaison descendante, DCI, comprenant des informations d'ordonnancement de liaison descendante et une demande de rétroaction HARQ-ACK basée sur les processus de demande de répétition automatique hybride, HARQ, liée à un ordonnancement semi-persistant, SPS ;
• la génération (S1005) d'un livre de codes HARQ-ACK basé sur les processus HARQ sur la base de la demande et d'informations HARQ-ACK sur la base des informations d'ordonnancement de liaison descendante ;
• l'obtention d'une réponse HARQ-ACK en concaténant le livre de codes HARQ-ACK basé sur les processus HARQ et les informations HARQ-ACK ; et
• la transmission de la réponse HARQ-ACK,
• dans lequel le livre de codes HARQ-ACK basé sur les processus HARQ contient uniquement des informations HARQ-ACK pour des processus HARQ-ACK de configurations SPS.

2. Procédé selon la revendication 1, dans lequel le livre de codes HARQ-ACK basé sur les processus HARQ contient des informations HARQ-ACK pour au moins une cellule de desserte, dans lequel les informations HARQ-ACK pour l'au moins une cellule de desserte comprennent les informations HARQ-ACK pour les processus HARQ-ACK pour chaque index de configurations SPS pour chacune de l'au moins une cellule de desserte.

3. Procédé selon la revendication 1, dans lequel le livre de codes HARQ-ACK basé sur les processus HARQ contient des informations HARQ-ACK pour au moins une cellule de desserte, dans lequel les informations HARQ-ACK pour l'au moins une cellule de desserte comprennent des informations HARQ-ACK pour chaque identifiant, ID, de processus HARQ-ACK pour une configuration SPS pour chacune de l'au moins une cellule de desserte.

4. Procédé selon la revendication 1 ou 3, dans lequel les configurations SPS sont des configurations SPS activées parmi des configurations SPS fournies à l'UE.

5. Procédé selon la revendication 1, dans lequel les DCI comprennent un contrôle de redondance cyclique, CRC, embrouillé avec un identifiant temporaire de réseau radio d'ordonnancement configuré, CS-RNTI.

6. Procédé selon la revendication 1, dans lequel les configurations SPS ont une priorité identique à une priorité liée à un indicateur de priorité dans les DCI parmi des configurations SPS fournies à l'UE.

7. Équipement utilisateur (100, 200) pour transmettre des informations d'accusé de réception de demande de répétition automatique hybride, HARQ-ACK, pour un système de communication sans fil, l'équipement utilisateur (100, 200) comprenant :
• au moins un émetteur-récepteur (106, 206) ;
• au moins un processeur (102, 202) ; et
• au moins une mémoire informatique (104, 204) connectée de manière opérationnelle à l'au moins un processeur (102, 202) et ayant stocké dans celle-ci des instructions qui, lorsqu'elles sont exécutées, amènent l'au moins un processeur (102, 202) à effectuer des opérations selon le procédé de l'une quelconque des revendications 1 à 6.

8. Support de stockage lisible par ordinateur, dans lequel le support de stockage stocke au moins un code de programme contenant des instructions qui, lorsqu'elles sont exécutées, amènent au moins un processeur à effectuer des opérations selon le procédé de l'une quelconque des revendications 1 à 6.

9. Procédé de réception d'informations d'accusé de réception de demande de répétition automatique hybride, HARQ-ACK, par une station de base dans un système de communication sans fil, le procédé comprenant :
• la transmission (S1303) d'informations de commande de liaison descendante, DCI, comprenant des informations d'ordonnancement de liaison descendante et une demande de rétroaction HARQ-ACK basée sur les processus de demande de répétition automatique hybride, HARQ, liée à un ordonnancement semi-persistant, SPS ; et
• la réception (S1305), sur la base des DCI, d'une réponse HARQ-ACK,
• dans lequel la réponse HARQ-ACK est obtenue en concaténant un livre de codes HARQ-ACK basé sur les processus HARQ lié à la demande et des informations HARQ-ACK liées aux informations d'ordonnancement de liaison descendante,
• dans lequel le livre de codes HARQ-ACK basé sur les processus HARQ contient uniquement des informations HARQ-ACK pour des processus HARQ-ACK de configurations SPS.

10. Station de base (100, 200) pour recevoir des informations d'accusé de réception de demande de répétition automatique hybride, HARQ-ACK, pour un système de communication sans fil, la station de base comprenant :
• au moins un émetteur-récepteur (106, 206) ;
• au moins un processeur (102, 202) ; et
• au moins une mémoire informatique (104, 204) connectée de manière opérationnelle à l'au moins un processeur (102, 202) et ayant stocké dans celle-ci des instructions qui, lorsqu'elles sont exécutées, amènent l'au moins un processeur (102, 202) à effectuer des opérations selon le procédé de la revendication 9.
